# EUROPÄISCHE PATENTSCHRIFT

(11) **EP 0 686 676 B1**
(45) Veröffentlichungstag und Bekanntmachung des Hinweises auf die Patenterteilung: **19.08.1998**
(21) Anmeldenummer: 95108429.2
(22) Anmeldetag: 01.06.1995
(51) Int. Cl.: C09C 1/30, C09C 3/12, G03G 9/097, B01J 20/32, B01D 19/04

(54) **Verfahren zur Silylierung von anorganischen Oxiden und derart silylierte Kieselsäure**
Process for silylating inorganic oxides and silylated silica
Procédé de silylation d'oxydes inorganiques et silice ainsi obtenue

(30) Priorität: 01.06.1994 DE 4419234
(43) Veröffentlichungstag der Anmeldung: 13.12.1995
(73) Patentinhaber: Wacker-Chemie GmbH, 81737 München (DE)
(72) Erfinder: Barthel, Herbert, Dr., D-84547 Emmerting (DE); Heinemann, Mario, Dr., D-84489 Burghausen (DE); Herrmann, Franz, D-84547 Emmerting (DE); Altenbuchner, August, A-5121 St. Radegund (AT)

(56) Entgegenhaltungen:
- EP-A- 0 579 049
- DE-A- 1 163 784
- DE-A- 1 916 360
- DE-A- 2 024 443
- DE-A- 2 403 783
- FR-A- 2 078 599
- FR-A- 2 305 390
- FR-A- 2 639 352
- PATENT ABSTRACTS OF JAPAN vol. 18 no. 222 (C-1193) ,21.April 1994 & JP-A-06 016971 (NIPPON SHIRIKA) 25.Januar 1994,

## Beschreibung

Die Erfindung betrifft hochunpolare Kieselsäure, ein Verfahren zur Herstellung hochunpolarer anorganischer Oxide und ihre Verwendung.

Die Verwendung von anorganischen Oxiden, z.B. Kieselsäure, als Verdickungs- und Thixotropiermittel in Flüssigkeiten ist bekannt. Der Verdickungs- und Thixotropierungseffekt läßt sich durch den Aufbau eines dreidimensionalen Netzwerkes aus Kieselsäure-Partikeln in der Flüssigkeit erklären. Für die Ausbildung und Stabilität des Netzwerkes in der Flüssigkeit sind die Wechselwirkungen zwischen den Silanolgruppen benachbarter Kieselsäure-Partikel ausschlaggebend, z.B. über die Bildung von Wasserstoffbrückenbindungen. In unpolaren Flüssigkeiten kommen diese Wechselwirkungen voll zum Tragen. Die Wirkung von Kieselsäure als Verdickungsmittel von Flüssigkeiten ist daher in unpolaren oder wenig polaren Systemen wie Kohlenwasserstoffen oder Polydimethylsiloxanen besonders stark ausgeprägt. In Medien mit einer hohen Affinität zu den Silanolgruppen der Kieselsäureoberfläche, wie z.B. über Wasserstoffbrücken, erfolgt eine Destabilisierung des Kieselsäure-Raumnetzes. Aus diesem Grund ist die Verdickung von hochpolaren Flüssigkeiten wie Wasser oder Ethanol nur mit großen Mengen an Kieselsäure möglich. Polare Systeme, wie z.B. Lösungsmittel, Polymere oder Harze, die sauerstoffhaltige polare Gruppen, wie z.B. Keto-, Epoxy-, Ether-, Ester-, Hydroxy- oder Carboxylgruppen oder stickstoffhaltige polare Gruppen, wie z.B. primäre, sekundäre oder tertiäre Amino-, Amido-, Iminogruppen oder quarternäre Ammoniumgruppen, enthalten, besitzen heute große technische Bedeutung, beispielsweise Epoxidharze, Polyurethane, Vinylesterharze oder wässrige Dispersionen und Emulsionen, als Lacke, Beschichtungsmittel oder Kleber. Um hier den destabilisiernden Einfluß der Silanolgruppen der Kieselsäureoberfläche bei der Ausbildung des Partikel-Raumnetzes zu unterbinden, gibt es Versuche, solche Systeme mit unpolaren Kieselsäuren, d.h. solchen Kieselsäuren, deren Gehalt an Oberflächensilanolgruppen vermindert ist, zu verdicken und zu thixotropieren. Dies gelingt jedoch nur in sehr unterschiedlichem Maß und scheint vom System abhängig zu sein.

Ein Ziel ist daher die effektive Beseitigung der Silanolgruppen auf der Kieselsäureoberfläche, d.h. die vollständige Silylierung der Kieselsäure, da diese Silanolgruppen das zur Verdickung und Thixotropierung notwendige Partikel-Raumnetz in polaren Systemen destabilisieren.

Verfahren zur Herstellung unpolarer Kieselsäuren sind bekannt.

In DE-AS 11 63 784 (Deutsche Gold- und Silber-Scheideanstalt) und der auf ihr aufbauenden DE 32 11 431 (Degussa AG), sind Verfahren zur Silylierung von Kieselsäure beschrieben. In den dort beschriebenen Verfahren wird Kieselsäure, die an ihrer Oberfläche Silanolgruppen aufweist, in einem trockenen Inert-Gasstrom bei Temperaturen von 600°C bis 1000°C, vorzugsweise 800°C bis 900°C, zu einem absolut trockenen Produkt getrocknet und mit Silylierungsmittel wie Alkyl- oder Aryl- oder gemischten Alkyl-Aryl-Halogensilanen silyliert. Bei diesem Verfahren wird die Kieselsäure unter Sauerstoffausschluß mit geringen Wasserdampfmengen, einem Inertgas und einem gasförmigen Silylierungsmittel bei einer Temperatur von 200°C bis 800°C, vorzugsweise bei 400°C bis 600°C behandelt. Nachteil dieses Verfahrens ist die geringe Ausbeute an die Kieselsäure gebundenem Silyliermittel. Ein weiterer Nachteil dieses Verfahrens ist der Restgehalt an Oberflächen-Silanolgruppen der Kieselsäure.

In DE-OS 19 16 360 (Deutsche Gold- und Silber-Scheideanstalt) ist ein Verfahren beschrieben, in dem Kieselsäure im Wirbelbett mit einem trockenen Inert-Gasstrom bei Temperaturen von 600°C bis 1000°C, vorzugsweise 800°C bis 900°C zu einem absolut trockenen Produkt getrocknet wird und mit in die Gasphase überführten linearen und/oder cyclischen Organopolysiloxanen und gegebenenfalls Organohalogensilanen bei Temperaturen von 25°C bis 350°C beladen wird und bei Temperaturen im Bereich von 350°C bis 650°C mit Organosiliciumverbindungen zur Reaktion gebracht wird, um sodann bei Temperaturen von 125°C bis 500°C nachbehandelt zu werden. Als Silylierungsmittel werden lineare oder cyclische Organopolysiloxane, welche im genannten Temperaturbereich verdampfbar sind oder in diesem Temperaturbereich als Dampf entstehen, oder Gemische verwendet.

Die oben beschriebenen Verfahren arbeiten mit gasförmigen Silylierungsmitteln. Der eigentlichen chemischen Reaktion der Silylierung ist daher das Gleichgewicht der Adsorption/Desorption zwischen gasförmigen und oberflächengebundenem Silyliermittel vorgelagert. Bei den für die chemische Fixierung des Silyliermittels notwendigen erhöhten Temperaturen liegt dieses Gleichgewicht stark auf Seite der Desorption des Silyliermittels von der Kieselsäureoberfläche. Die erzielbaren Ausbeuten, bezogen auf eingesetztes zu auf Kieselsäure gebundenem Silylierungsmittel, sind daher gering.

Die geringe Ausbeute führt zu erhöhter Umweltbelastung durch nicht umgesetztes Silylierungsmittel und hohen Kosten.

Aus DE-OS 25 13 608 (Deutsche Gold- und Silber-Scheideanstalt) ist ein Verfahren bekannt, bei dem Kieselsäure im Wirbelbett mit einem trockenen Inert-Gasstorm bei Temperaturen von 600°C bis 1000°C, vorzugsweise 800°C bis 900°C zu einem absolut trockenen Produkt getrocknet wird und anschließend bei gleichzeitiger Erwärmung auf Temperaturen im Bereich von etwa 200°C bis 300°C in einen fluidisierten Zustand gebracht wird und währenddessen mit einem flüchtigen, unterhalb von 300°C siedenden und beständigen Organosilan tropfenweise versetzt wird. Laboruntersuchungen zeigen jedoch, daß das Zutropfen von Organosilan zu Kieselsäure bei Temperaturen, die über der Siedetemperatur des Silans liegen, zu schlechter Ausbeute und auch nicht zu den gewünschten hohen Silylierungsgraden führt.

In DE-OS 24 03 783 (Bayer AG) ist ein Verfahren zur Silylierung von Kieselsäure beschrieben, bei dem Kieselsäure mit einer Mischung aus einem mit Wasser nur langsam reagierenden, flüssigen Organosilazan und großen Wassermengen, die um etwa 50% über denen des verwendeten Silazans liegen, bei Temperaturen von 0°C bis 100°C, vorzugsweise Rauntemperatur, über die aufgewirbelte Kieselsäure gesprüht wird und das erhaltene Produkt bei Temperaturen von 130°C bis 170°C von den flüchtigen Bestandteilen befreit wird. Wie dort beschrieben, wird die Verdickungswirkung der so erhaltenen Kieselsäure durch die Behandlung stark erniedrigt.

In DE 27 28 490 (Deutsche Gold- und Silber-Scheideanstalt) wird Kieselsäure in geeigneten Lösungsmitteln mit Organopolysiloxanen silyliert. Die entstehende Kieselsäure zeigt weder eine wesentliche Verdickung noch Strukturierung von Flüssigkeiten.

Im weiteren sind Verfahren bekannt, in denen pulverförmige anorganische Oxide, wie z.B. Kieselsäuren mit flüssigen Organosiliciumverbindungen in Form flüssiger, kleiner Tropfen besprüht werden. Feinstteilige anorganische Oxide, wie hochdisperse Kieselsäuren, sind durch äußerst geringe Primärpartikeldurchmesser im Submikronbereich gekennzeichnet. Das Besprühen mit einem Silylierungsmittel mittels herkömmlichen Sprühtechniken führt erfahrungsgemäß zu inhomogener Belegung und zu nur physikalisch beschichteten Partikeln, die nicht vollständig unpolar sind. So zeigen eigene Laborversuche, daß solche Verfahren nicht geeignet sind, hochdisperse Kieselsäuren homogen unter Ausbildung eines hohen Silylierungsgrades und der Beseitigung aller reaktionsfähigen Silanolgruppen und einer durchweg chemisch fixierten, d.h. nicht mehr löslichen Silyliermittelschicht zu belegen. Diese Probleme sind insbesondere dann gegeben, wenn Silyliermittel mit erhöhter Viskosität eingesetzt werden.

In DE 21 070 82 (Imperial Chemical Industries Ltd.) wird pyrogene Kieselsäure mit flüssigen Or-ganosiliciumverbindungen besprüht. Erreicht wird jedoch nur ein mäßiger Silylierungsgrad der Kieselsäure, gekennzeichnet durch eine Methanolzahl (dort definiert als Gewichtsprozent Methanol in Wasser, ausreichend um die Kieselsäure vollständig zu benetzen, d.h., um ein vollständiges Einsinken der Kieselsäure in einem Wasser-Methanol-Genisch zu erzielen) von kleiner als 35.

Im Verfahren gemäß DE 20 57 731 (Deutsche Gold- und Silber-Scheideanstalt) muß zusätzlich Ammoniak zugefügt werden, um beim Aufsprühen von Alkoxysilanen bzw. Alkoxy-endständigen Organosiloxanen auf Kieselsäure deren Hydrophobie, das heißt eine Nicht-Wasserbenetzbarkeit, zu erreichen.

Aus DE-OS 37 07 226 (Wacker-Chemie GmbH) ist ein Verfahren zur Herstellung von hochdispersem Metalloxid mit ammoniumfunktionellem Organopolysiloxan modifizierter Oberfläche als positiv steuerndes Ladungsmittel bekannt, bei dem Siliciumdioxid mit einer alkoholischen Lösung eines ammoniumfunktionellen Organopolysiloxans versetzt wird.

Ferner ist es aus DE-A-20 24 443 bekannt, pyrogene Kieselsäure mit z.B. Propyltrichlorsilan zu hydrophobieren, wobei das Silan bei 20°C mit Preßlüft aufgesprüht wurde.

Nachteilig am Stand der Technik ist, daß keine vollständige Silylierung der Kieselsäure, z.B. unter Beibehaltung von deren Verdickungswirkung, erfolgt, obwohl große Überschuß-Mengen an Silylierungsmittel eingesetzt werden, die dadurch eine Belastung für die Umwelt darstellen.

Aufgabe der Erfindung ist, die bekannten Silylierungsverfahren zu verbessern sowie eine hochunpolare Kieselsäure mit verbesserten Eigenschaften zur Verfügung zu stellen. Diese Aufgabe wird durch die Erfindung gelöst.

Gegenstand der Erfindung ist ein Verfahren zur Silylierung von feinstteiligen anorganischen Oxiden, dadurch gekennzeichnet, daß die feinstteiligen anorganischen Oxide mit mindestens einem im Temperaturbereich des gesamten Verfahrens schwer flüchtigen Silylierungsmittel behandelt werden, mit der Maßgabe, daß das schwer flüchtige Silylierungsmittel den feinstteiligen anorganischen Oxiden flüssig in Form eines feinstzerstäubten Aerosols zugemischt wird.

Bei dem erfindungsgemäßen Verfahren können feinstteilige anorganische Metalloxide, mit einer mittleren Primärteilchen-Partikelgröße von bis zu 1 µm verwendet werden. Derartige Metalloxide sind vorzugsweise Titandioxid, Aluminiumoxid und Siliciumdioxide, wie Kieselsäuren. Kieselsäure kann durch eine naßchemische Fällung oder pyrogen durch Flammenhydrolyse, z.B. von Tetrachlorsilan, hergestellt werden.

Die im erfindungsgemäßen Verfahren bevorzugt verwendeten Kieselsäuren weisen eine mittlere Primärteilchen-Partikelgröße von bis zu 250 nm auf, bevorzugt kleiner als 100 nm, besonders bevorzugt eine mittleren Primärteilchen-Partikelgröße von 2 bis 50 nm, insbesondere mit einer spezifischen Oberfläche größer als 25 m²/g, bevorzugt von 50 m²/g bis 400 m²/g, besonders bevorzugt von 150 m²/g bis 250 m²/g (gemessen nach der BET Methode nach DIN 66131 und 66132). Es können hydrophile oder bereits silylierte Kieselsäuren eingesetzt werden. Es können Fällungskieselsäuren oder pyrogen hergestellte Kieselsäuren eingesetzt werden. Besonders bevorzugt sind pyrogen hergestellte, hochdisperse Kieselsäuren, die in bekannter Weise, wie beispielsweise in DE 26 20 737 beschrieben, aus Siliciumhalogenverbindungen pyrogen erzeugt werden. Sie werden unter anderem durch Hydrolyse von Siliciumtetrachlorid in einer Knallgasflamme hergestellt.

Die pyrogene Kieselsäure kann direkt aus dem Brenner kommen, zwischengelagert oder bereits handelsüblich verpackt sein.

Das im erfindungsgemäßen Verfahren verwendete anorganische Oxid kann besonders bevorzugt ein anorganisches Oxid, z.B. pyrogene Kieselsäure, deren Oberfläche mit Dialkylsiloxygruppen modifiziert wurde, wie solche, hergestellt nach DE 42 21 716 (Wacker-Chemie GmbH), sein, das bereits einen Kohlenstoffgehalt von unter 1 Gew.-% pro 100 m²/g spezifischer Oberfläche (gemessen nach der BET Methode nach DIN 66131 und 66132) aufweist. Derartige Kieselsäure ist ganz besonders bevorzugt. Diese Kieselsäure kann frisch hergestellt sein. Diese Kieselsäure kann jedoch auch als gelagerte oder handelsüblich verpackte Kieselsäure eingesetzt werden.

Als Silylierungsmittel wird eine oder ein Gemisch aus mehreren Organosiliciumverbindungen verwendet, wobei zumindest eine der eingesetzten Organosiliciumverbindungen im Temperaturbereich des Verfahrens von 0°C bis 350°C, bevorzugt 20°C bis 250°C und besonders bevorzugt 20°C bis 180°C schwer flüchtig ist. Werden in einer bevorzugten Ausführung zusätzlich flüchtige Organosiliciumverbindungen verwendet, so werden solche verwendet, deren Siedepunkt unterhalb des genannten Temperaturbereiches des Verfahrens liegt. Als Verfahren ist dabei der gesamte Vorgang der Silylierung zu verstehen, angefangen mit dem Vermischen von Kieselsäure und Silylierungsmittel sowie alle nachfolgenden Nachbehandlungs- und Reinigungsschritte.

Als Organosiliciumverbindungen werden vorzugsweise Organosilane der allgemeinen Formel

R¹ ₙSiX₄₋ₙ (I)

worin
R¹ gleich oder verschieden sein kann und ein einwertiger, gegebenenfalls halogenierter, Kohlenwasserstoffrest mit 1 bis 18 C-Atomen,
X gleich oder verschieden sein kann und Halogen, bevorzugt Chlor, oder OH, OR², OCOR², O(CH₂)ₓOR²,
R² gleich oder verschieden sein kann und einen einwertigen Kohlenwasserstoffrest mit 1 bis 8 C-Atomen bedeutet,
n 1 oder 2, bevorzugt 2 und
x = 1, 2, 3 ist, bevorzugt 1,
und/oder Organosiloxane der Formel

(R¹ ₐX_{b}SiO_{1/2})_{z}(R¹ ₂SiO_{2/2})ₓ(R³R¹SiO_{2/2})_{y}(SiX_{b}R¹ ₐ)_{z} (II)

worin
R¹ die oben dafür angegebene Bedeutung hat,
R² die oben dafür angegebene Bedeutung hat,
R³ gleich oder verschieden sein kann, ein Wasserstoff und ein von R¹ verschiedener, einwertiger, gegebenenfalls halogenierter, Kohlenwasserstoffrest mit 1 bis 18 C-Atomen,
X die oben dafür angegebene Bedeutung hat, bevorzugt OH
a 0, 1, 2 oder 3, bevorzugt 2,
b 0, 1, 2 oder 3, bevorzugt 1,
wobei die Summe a + b gleich 3 ist,
x 0 oder eine ganze Zahl von 1 bis 200, bevorzugt 10 bis 50,
y 0 oder eine ganze Zahl von 1 bis 200, bevorzugt x zu y mindestens gleich 5 zu 1
und die Summe x + y gleich 0 oder eine ganze Zahl zwischen 1 und 200 ist, bevorzugt 10 bis 50,
z 0 oder 1 ist, mit der Maßgabe, daß z größer 0 ist, wenn die Summe x+y 0 ist, bevorzugt z 1,
eingesetzt.

Die Herstellung der Organosilane ist vielfach bekannt und erfolgt aufgrund allgemein bekannter Herstellungsverfahren.

Die Herstellung der Organosiloxane ist vielfach bekannt und erfolgt aufgrund allgemein bekannter Herstellungsverfahren.

Beispiele für R¹ sind Alkylreste wie der Methylrest, der Ethylrest, Propylreste wie der iso- oder der n-Propylrest, Butylreste wie der t- oder n-Butylrest, Pentylreste wie der neo-, der iso- oder der n-Pentylrest, Hexylreste wie der n-Hexylrest, Heptylreste wie der n-Heptylrest, Octylreste wie der 2-Ethyl-hexyl- oder der n-Octylrest, Decylreste wie der n-Decylrest, Dodecylreste wie der n-Dodecylrest, Hexadecylreste wie der n-Hexadecylrest, Octadecylreste wie der n-Octadecylrest, Alkenylreste wie der Vinyl-, der 2-Allyl- oder der 5-Hexenylrest, Arylreste wie der Phenyl-, der Biphenyl oder Naphthylrest, Alkylarylreste wie Benzyl-, Ethylphenyl-, Toluyl- oder die Xylylreste, halogenierte Alkylreste wie der 3-Chlorpropyl-, der 3,3,3-Trifluorpropyl oder der Perfluorhexylethylrest, halogenierte Arylreste wie der Chlorphenyl oder Chlorbenzylrest. Bevorzugte Beispiele für R¹ sind der Methylrest, der Ethylrest, Propylreste wie der iso- oder der n-Propylrest, Butylreste wie der t- oder n-Butylrest. Besonders bevorzugt ist der Methylrest.

Beispiele für R² sind Alkylreste wie der Methylrest, der Ethylrest, Propylreste wie der iso- oder der n-Propylrest, Butylreste wie der t- oder n-Butylrest, Pentylreste wie der neo-, der iso- oder der n-Pentylrest, Hexylreste wie der n-Hexylrest, Heptylreste wie der n-Heptylrest, Octylreste wie der 2-Ethyl-hexyl- oder der n-Octylrest. Bevorzugte Beispiele für R² sind der Methyl-, Ethyl- und Propylrest. Besonders bevorzugt ist der Methylrest.

Beispiele für R³ sind Alkylreste wie der Methylrest, der Ethylrest, Propylreste wie der iso- oder der n-Propylrest, Butylreste wie der t- oder n-Butylrest, Pentylreste wie der neo-, der iso- oder der n-Pentylrest, Hexylreste wie der n-Hexylrest, Heptylreste wie der n-Heptylrest, Octylreste wie der 2-Ethyl-hexyl- oder der n-Octylrest, Decylreste wie der n-Decylrest, Dodecylreste wie der n-Dodecylrest, Hexadecylreste wie der n-Hexadecylrest, Octadecylreste wie der n-Octadecylrest, Alkenylreste wie der Vinyl-, der 2-Allyl- oder der 5-Hexenylrest, Arylreste wie der Phenyl-, der Biphenyl oder Naphthylrest, Alkylarylreste wie Benzyl-, Ethylphenyl-, Toluyl- oder die Xylylreste, halogenierte Alkylreste wie der 3-Chlorpropyl-, der 3,3,3-Trifluorpropyl oder der Perfluorhexylethylrest, halogenierte Arylreste wie der Chlorphenyl oder Chlorbenzylrest. Bevorzugt sind der n-Octyl-, der n-Octadecyl, der Vinyl- und der 3,3,3-Trifluorpropylrest. Besonders bevorzugt ist der n-Octylrest.

Beispiele für Organosilane gemäß Formel I sind Methyltrichlorsilan, Vinyltrichlorsilan, Dimethyldichlorsilan, Vinylmethyldichlorsilan, Methyltrimethoxysilan, Vinyltrimethoxysilan, Dimethyldimethoxysilan, Vinylmethyldimethoxysilan, Methyltriethoxysilan, Vinyltriethoxysilan, Dimethyldiethoxysilan, Vinylmethylethoxysilan, Methyltriacethoxysilan, Dimethyldiacethoxysilan, Octylmethyldichlorsilan, Octadecylmethyldichlorsilan. Bevorzugt sind die Dialkylsilane, besonders bevorzugt sind Dialkyldichlorsilane, wie Dimethyldichlorsilan, Octylmethyldichlorsilan und Octadecylmethyldichlorsilan sowie Dimethyldimethoxysilan und Dimethyldiethoxysilan. Besonders bevorzugt ist Dimethyldichlorsilan.

Es können auch beliebige Gemische aus Organosilanen in beliebigen Mischungverhältnissen eingesetzt werden. Hierbei sind solche Mischungen bevorzugt, in denen gemäß Formel I Verbindungen mit n = 2 mit größer 80 Mol%, bevorzugt größer 90 Mol%, vorliegen. Hierbei sind insbesondere Mischungen bevorzugt, in denen mindestens eine Verbindung gemäß Formel I, bei der R¹ verschieden ist, z.B. eine Methylgruppe und eine Alkylgruppe mit mindestens 6 C-Atomen, vorliegt. Bevorzugt sind hier Mischungen aus Dimethyldichlorsilan und Octylmethyldichlorsilan im Verhältnis von 5 zu 1 bis 50 zu 1.

Beispiele für Organosiloxane sind lineare oder cyclische Dialkylpolysiloxane mit einer mittleren Anzahl an Dialkylsiloxyeinheiten von bis zu 200, bevorzugt von 5 bis 100, besonders bevorzugt von 10 bis 50. Bevorzugt sind die Dialkylpolysiloxane, unter denen die Dimethylpolysiloxane bevorzugt sind. Besonders bevorzugt sind lineare Polydimethylsiloxane mit folgenden Endgruppen: Trimethylsiloxy, Dimethylhydroxysiloxy, Dimethylchlorsiloxy, Dimethylmethoxysiloxy, Dimethylethoxysiloxy, Methyldichlorsiloxy, Methyldimethoxysiloxy, Methyldiethoxysiloxy, Dimethylacetoxysiloxy, Methyldiacetoxysiloxy; die Endgruppen können gleich oder verschieden sein. Besonders bevorzugt sind unter den genannten Polydimethylsiloxanen solche mit einer Viskosität von 10 bis 100 mPa.s, insbesondere von 20 bis 60 mPa.s bei 25°C, und wobei beide Endgruppen Dimethylhydroxysiloxygruppen sind. Eingesetzt werden können auch beliebige Gemische in beliebigen Mischungsverhältnissen aus den genannten Organosiloxanen.

Besonders bevorzugt sind Silylierungsmittel oder Silylierungsmittelgemische nach den Formeln I und II, die auf der hochunpolaren pyrogenen Kieselsäure zu einer Belegung mit Kohlenwasserstoffsiloxygruppen führen, die zu mindestens 80 Mol%, bevorzugt zu mindestens 90 Mol% und besonders bevorzugt zu mindestens 98 Mol% Siloxygruppen aufweisen, die mit zwei Kohlenwasserstoffresten substituiert sind, bevorzugt Dialkylsiloxygruppen, besonders bevorzugt Dimethylsiloxygruppen.

In einer bevorzugten Ausführung kann es sich bei den im erfindungsgemäßen Verfahren als Silylierungsmittel eingesetzten Organosiliciumverbindungen gemäß Formel (I) und gemäß Formel (II) jeweils um eine einzige Art eines Organosilans der Formel (I) und um eine einzige Art eines Organopolysiloxans der Formel (II), wie auch um ein Gemisch aus mindestens zwei verschiedenen Arten des Organosilans gemäß der Formel (I) und eines Gemisches aus mindestens zwei verschiedenen Arten des organosiloxans gemäß der Formel (II) oder um eine Art des Organosilans der Formel (I) und ein Gemisch des Organosiloxans der Formel (II) oder um ein Gemisch des Organosilans der Formel (I) und eine Art des Organosiloxans der Formel (II) handeln.

Alle in dieser Schrift angegeben Gewichtsteile beziehen sich auf 100 Gewichtsteile Kieselsäure.

Das Silylierungsmittel wird vorzugsweise in Mengen von 2 bis 100 Gewichtsteilen, bevorzugt 5 bis 50 Gewichtsteilen, zugegeben.

In einer bevorzugten Ausführung des erfindungsgemäßen Verfahrens werden als Silylierungsmittel schwer flüchtige und flüchtige Organosiliciumverbindungen eingesetzt, wobei unter schwer flüchtig zu verstehen ist, daß das Silylierungsmittel im Temperaturbereich des Verfahrens nicht in die Gasphase desorbiert, dies ist vorzugsweise bei einem Dampfdruck von 0 mbar bis 100 mbar und besonders bevorzugt bei einem Dampfdruck von 0 mbar bis 10 mbar gegeben. Dieses kann in beliebigen Verhältnissen von schwer flüchtigen zu flüchtigen Or-ganosiliciumverbindungen eingesetzt werden, bevorzugt besteht es aus 1 bis 99 Gew-%, besonders bevorzugt zu 20 bis 95 Gew-% und ganz besonders bevorzugt zu 50 bis 90 Gew-% aus nicht flüchtigen Organosiliciumverbindungen.

In einer bevorzugten Ausführung des erfindungsgemäßen Verfahrens werden neben den Organosiliciumverbindungen protische Lösungsmittel eingesetzt. Diese Lösungsmittel können in flüssiger, zerstäubter oder gasförmiger Form angewendet werden. Dabei handelt es sich vorzugsweise um Wasser und/oder niedere Alkohole. Es können Gemische von verschiedenen Alkoholen und Gemische von einem oder verschiedener Alkohole mit Wasser eingesetzt werden. Die zusätzliche Behandlung mit Wasser, Alkohol und zusätzlicher flüchtiger Organosiliciumverbindung kann in beliebiger Reihenfolge erfolgen. Die zusätzliche Behandlung mit Wasser, Alkohol und zusätzlicher flüchtiger Organosiliciumverbindung kann vor, im gleichen Schritt oder anschließend an die Behandlung mit schwer flüchtigen Organosiliciumverbindungen erfolgen.

Die im erfindungsgemäßen Verfahren eingesetzten protischen Lösungsmittel können vorzugsweise niedere Alkohole oder Gemische verschiedener niederer Alkohole sein. Bevorzugt sind Alkohole mit maximal 8 Kohlenstoffatomen. Besonders bevorzugt sind Alkanole wie Methanol, Ethanol, Isopropanol, Butanol und Hexanol.

Die Alkohole oder Alkoholgemische werden vorzugsweise in Mengen von 0,5 bis 50 Gewichtsteilen, bevorzugt in Mengen von 1 bis 20 Gewichtsteilen und besonders bevorzugt in Mengen von 2 bis 10 Gewichtsteilen eingesetzt.

Wasser kann als protisches Lösungsmittel im erfindungsgemäßen Verfahren als homogenes Gemisch mit einem niederen Alkohol oder mit Gemischen aus verschiedenen niederen Alkoholen eingesetzt werden. Das Wasser wird vorzugsweise in Mengen von 0,5 bis 50 Gewichtsteilen und bevorzugt in Mengen von 2 bis 20 Gewichtsteilen eingesetzt. Falls Wasser in einem Gemisch mit Alkoholen eingesetzt wird, wird Wasser zu Alkohol vorzugsweise in einem Verhältnis von 1 zu 10 bis 10 zu 1, bevorzugt in einem Verhältnis von 1 zu 4 bis 4 zu 1 eingesetzt. Besonders bevorzugt ist eine Gewichtsmenge an Wasser, die die Gewichtsmenge an Silylierungsmittel nicht übersteigt.

Bei dem erfindungsgemäßen Verfahren wird die nicht speziell getrocknete, gegebenenfalls Wasser-feuchte und HCl-Gas-haltige Kieselsäure so bewegt, daß sie fluidisiert ist, beispielsweise durch Fördereinrichtungen wie Ventilatoren oder Druckluftmembranpumpen, oder durch Rühren, dies kann beispielsweise mit Flügelrühren bei 10 bis 5000 UpM erfolgen, bevorzugt 100 bis 2000 UpM, bzw. in einem Wirbelbett durch Gasstrom oder nach einem in DE 42 21 716 (Wacker-Chemie GmbH) in einem Silo beschriebenen Verfahren fluidisiert und bei einer Temperatur von 0°C bis 350°C, vorzugsweise 20°C bis 250°C, besonders bevorzugt 20°C bis 180°C, mit bei dieser Temperatur schwer flüchtiger, flüssiger in Form eines feinstzerstäubten Aerosols vorliegender Organosiliciumverbindung intensiv vermischt, wobei diese Organosiliciumverbindung über den gesamten Reaktionsraum feinstverteilt wird. Unter feinstzerstäubter Organosiliciumverbindung ist eine mittlere Tropfengröße kleiner als 500 µm, bevorzugt kleiner als 250 µm, besonders bevorzugt kleiner 100 µm zu verstehen. Unter einem Aerosol ist ein disperses System in Form eines Nebelaerosols, das aus den Phasen flüssig/gasförmig besteht, zu verstehen. Die flüssige Phase ist das Silylierungsmittel und die gasförmige Phase ist das Umgebungsgas, wie Inertgas aus Stickstoff und/oder Kohlendioxid, Luft oder Inertgasgemische mit Luft. Die Feinstzerstäubung erfolgt durch Zerstäuben mittels Düsen-, Scheiben- oder Ultraschalltechnik. Dazu kann ein Ultraschallvernebler der Firma Lechler oder Scheiben der Firma Niro Atomizer verwendet werden. Es können Gemische von verschiedenen Organosiliciumverbindungen eingesetzt werden. Dieser Vorgang der Vermischung erfolgt während einer Verweilzeit von 1 Sekunde bis 24 h, bevorzugt 5 Sekunden bis 60 Minuten. Die Vermischung erfolgt bei 100 mbar bis 3 bar, bevorzugt bei Normaldruck.

Anschließend, nach dieser Vermischung, wird außerhalb des Reaktionsgefäßes in einem zweiten, gegebenenfalls geschlossenen Gefäß oder bevorzugt innerhalb des selben Reaktionsgefäßes mittels einer Nachbehandlung, einer Temperung, bei einer Temperatur von 0°C bis 400°C, vorzugsweise bei 50°C bis 350°C, besonders bevorzugt bei 60°C bis 180°C, die Reaktion vervollständigt, während einer Zeit von 1 Min bis 48 h, vorzugsweise 15 Min bis 6 h. Die Nachbehandlung kann an der ruhenden, an der durch Rühren bewegten oder an der durch einen Gasstrom, vorzugsweise einen Inertgasstrom, im Wirbelbett fluidisierten Kieselsäure durchgeführt werden. Die Nachbehandlung kann in einem oder in mehreren Reaktionsgefäßen erfolgen.

Zusätzlich wird ein weiterer Schritt der Reinigung der Kieselsäure von Reaktionsnebenprodukten angeschlossen, der bei 50°C bis 400°C, bevorzugt 150°C bis 380°C, besonders bevorzugt 250°C bis 360°C, innerhalb einer Zeit von 1 Min bis 6 h, bei einem Druck von 0,01 mbar bis Normaldruck, bevorzugt bei Normaldruck erfolgt. Die Reinigung kann an der ruhenden, an der durch Rühren bewegten oder an der durch einen Gasstrom, vorzugsweise einen Inertgasstrom, fluidisierten Kieselsäure durchgeführt werden.

Das Vermischen der Kieselsäure mit Organosiliciumverbindung, die Nachbehandlung und die Reinigung der Kieselsäure wird unter Inertgas, bevorzugt sind Stickstoff und Kohlendioxid, oder Inertgas-Gemische mit Luft, so daß die Zündfähigkeit des Silylierungsmittels ausgeschlossen ist, durchgeführt.

Die Schritte des Verfahrens, wie Vermischen, Nachbehandlung und Reinigung können als diskontinuierlicher oder kontinuierlicher Prozeß durchgeführt werden.

Bei allen Verfahrensschritten liegt noch nicht gebundenes Silylierungsmittel in kondensierter, nicht gasförmiger Form vor.

Die Vorteile des erfindungsgemäßen Verfahrens sind die Herstellung einer hochunpolaren hochdispersen Kieselsäure, eine vollständige chemische Fixierung des Silylierungsmittels, Verfahrenstemperaturen unter 400°C, die einen geringerer Energieaufwand zur Folge haben, ein geringerer Anteil an verflüchtigbarem Silylierungsmittel, hohe Reaktionsausbeuten, und daher eine geringere Belastung des Abgases mit Silylierungsmittel, was wirtschaftlicher ist und die Umwelt schont.

Es erfolgt eine homogene Umsetzung der schwer flüchtigen Organosiliciumverbindung auf der Oberfläche der Kieselsäure. Es wird trotz des Zusatzes von der schwer flüchtigen Organosiliciumverbindung zur Oberflächenbehandlung der Kieselsäure eine bessere, höhere Reaktionsausbeute, eine höhere Unpolarität und eine bessere rheologische Wirkung der Kieselsäure erzielt als durch den Einsatz der entsprechend (gemessen am Kohlenstoffgehalt) gleichen Menge an nur gasförmig zugesetzter, ansonsten chemisch identischer, Organosiliciumverbindung. Desweiteren sind trotz des Einsatzes einer schwer flüchtigen Organosiliciumverbindung keine nicht chemisch gebundenen, das heißt löslichen Anteile an Organosiliciumverbindung auf der fertigen Kieselsäure zu finden.

Bei dem durch dieses Verfahren hergestellten hochunpolarem feinteiligem anorganischem Oxid, handelt es sich bevorzugt um hochunpolare Kieselsäure, besonders bevorzugt um hochunpolare pyrogene Kieselsäure mit einer mittleren Primärteilchen-Partikelgröße kleiner als 100 nm, bevorzugt mit einer mittleren Primärteilchen-Partikelgröße von 2 bis 50 nm, besonders bevorzugt mit einer mittleren Primärteilchen-Partikelgröße von 5 bis 20 nm, insbesondere mit einer spezifischen Oberfläche größer als 25 m²/g, bevorzugt von 50 bis 300 m²/g, besonders bevorzugt 100 bis 200 m²/g (gemessen nach der BET Methode nach DIN 66131 und 66132). Die erfindungsgemäße hochunpolare Kieselsäure weist pro 100 m²/g spezifischer Oberfläche (gemessen nach der BET Methode nach DIN 66131 und 66132) einen Kohlenstoffgehalt von mindestens 1 Gew.-%, bevorzugt von mindestens 1,5 Gew.%, besonders bevorzugt von mindestens 2,0 Gew.% auf. Auf der Kieselsäure sind mittels IR-Spektroskopie keine isolierten Silanolgruppen bei einer Wellenzahl von 3750 cm⁻¹ nachweisbar. Die Kieselsäure weist auch nach längerem intensiven Kontakt mit Wasser, z.B. Schütteln, keine Wasser-benetzbaren Anteile auf. Die Kieselsäure zeigt eine Methanolzahl (Anhang III) von gleich oder größer als 50, bevorzugt von größer als 65, besonders bevorzugt von größer als 75 auf. Das Silylierungsmittel auf der Kieselsäure ist vollständig chemisch fest fixiert und weist keinen von der Kieselsäure extrahierbaren oder löslichen Anteil auf (Anhang I). Die erfindungsgemäße hochunpolare Kieselsäure zeigt einen geringen Restgehalt an relativer Sorptionskapazität für Hydroxylionen (Anhang II). Dieser Restgehalt liegt unter 25 %, bevorzugt unter 15 %, des Ausgangswertes an Sorptionskapazität für Hydroxylionen wie dieser für die nicht behandelte hydrophile Kieselsäure gefunden wird. Die erfindungsgemäße Kieselsäure kann nach diesen Charakteristika als vollständig unpolar oder hochunpolar bezeichnet werden. Die erfindungsgemäße Kieselsäure ist dadurch gekennzeichnet, daß sie eine hohe Verdickungswirkung aufweist, insbesondere in polaren Systemen wie wässrigen Lösungen, z.B. in Gemischen von Wasser mit niederen Alkoholen wie Methanol, Ethanol, iso- und n- Propanol, insbesondere mit einem Wassergehalt größer als 50 Gew. %, in wässrigen Dispersionen und Emulsionen, aber auch in anderen polaren Systemen wie z.B.: Polyestern, Vinylestern, Epoxiden und Polyurethanen. In einer besonders bevorzugten Ausführung ist die mit Dialkylsiloxyeinheiten silylierte hochunpolare Kieselsäure dadurch gekennzeichnet, daß sie eine höhere Verdickungswirkung aufweist, als solche Kieselsäuren, die mit Trialkylsiloxyeinheiten modifiziert sind und die die gleiche Sorptionskapazität für Hydroxylionen aufweisen.

Bevorzugt ist eine hochunpolare pyrogene Kieselsäure, bei der von dem gebundenen Silylierungsmittel mindestens 80 Mol% des Silylierungsmittels aus Siloxygruppen besteht, die mit zwei Kohlenwasserstoffresten substituiert sind.

Bei den Kohlenwasserstoffresten handelt es sich vorzugsweise um die Reste R¹ und R³, die die oben dafür angegebene Bedeutung haben.

Die erfindungsgemäße hochunpolare Kieselsäure zeigt bei Einsatz als rheologisches Additiv keine Störungen der Haftung oder Zwischenhaftung, auch werden keine Störungen der Überlackierbarkeit (z.B.: Kraterbildung), die auf Grund von Migration nicht gebundener Silylierungsmittelbestandteile auftreten können, beobachtet.

Kieselsäuren werden vorzugsweise als rheologisches Additiv in unpolaren Systemen eingesetzt. In unpolaren Systemen erfolgt der Aufbau der Viskosität durch Kieselsäure vor allem durch Wasserstoffbrückenbindungen zwischen den Oberflächen-silanolgruppen der Kieselsäurepartikel. In polaren Systemen können die Oberflächensilanolgruppen der Kieselsäure zu einem Zusammenbruch der Viskosität führen. Es ist daher bekannt, daß hydrophile Kieselsäuren in polaren Systemen, wie z.B. wässrige Alkohole, oder in Epoxidharzen, Vinylesterharzen oder Polyurethanen, keine befriedigende Wirkung als rheologisches Additiv erzielen. Insbesondere nach längerer Lagerzeit kommt es zu einem Abbau der Viskosität begleitet von einer starken Erniedrigung der Fließgrenze. Dies führt zu geringer Standfestigkeit bei höheren Schichtdicken an senkrechten Flächen und damit bei der Aushärtung zu unerwünschtem Ablauf. Herkömmliche silylierte Kieselsäuren erzielen hier ebenfalls keine befriedigende rheologische Wirksamkeit nach längerer Lagerzeit.

Ein weiterer Gegenstand der Erfindung ist die Verwendung der nach dem erfindungsgemäßen Verfahren hergestellten hochunpolaren pyrogenen Kieselsäure als Verdickungsmittel in polaren Systemen, als Absorptionsmittel für Öle, zur Verbesserung der Rieselfähigkeit von Tonern sowie in Antischaummitteln.

Die nach dem erfindungsgemäßen Verfahren hergestellte hochunpolare pyrogene Kieselsäure weist eine ausgeprägte Viskositätserhöhung auf, insbesondere für polare flüssige oder pastöse Medien, die z.B. aus solchen chemischen Verbindungen aufgebaut sind, die Wasserstoffbrückenbindungen oder dipolare Wechselwirkungen eingehen können, wie z.B. Epoxidharze, Polyurethane oder Polyvinylesterharze, und in solchen Systemen zur Ausbildung einer Fließgrenze und Thixotropie führt.

Daher wird die erfindungsgemäße hochunpolare Kieselsäure als rheologisches Additiv zum Beispiel in polaren Polymer-, Harz- und Lösungsmittelsystemen wie Epoxidharzen, Polyurethanen, Vinylesterharzen und anderen vergleichbaren Systemen zur Erzielung einer hohen und über die Zeit lagerstabilen Viskosität, Strukturviskosität und Fließgrenze eingesetzt.

Die Erfindung betrifft allgemein alle lösungsmittelfreien, lösungsmittelhaltigen, wasserverdünnbaren, filmbildenden Anstrichsmittel, gummiartige bis harte Beschichtungen, Klebstoffe, Versiegelungs- und Vergußmassen sowie andere vergleichbare Systeme. Sie betrifft Systeme von niedriger bis hoher Polarität, die als viskositätsgebende Komponente Kieselsäure enthalten.

Die Erfindung betrifft insbesondere Systeme wie:

### Epoxidsysteme

Bei den Epoxidsystemen handelt es sich um lösungsmittelhaltige oder lösungsmittelfreie, wasserverdünnbare Reaktionssysteme, wie Epoxid/Phenol, Epoxid/Amin, Epoxid/Isocyanat-Einbrennsysteme, Epo'xid/Ester sowie Aminhärter für Epoxidharze wie aliphatische, cycloaliphatische oder heterocycloaliphatische Polyamine.

### Polyurethansysteme (PUR)

Bei den Polyurethansystemen handelt es sich um PUR-1-Komponenten Systeme auf der Basis von ölmodifizierten Urethanen, deren Härtung oxidativ als Kalt-Härtung über eine ungesättigte Ölkomponente erfolgt, um PUR-1-Komponenten Systeme, die feuchtigkeitshärtend sind und eine Kalt-Härtung durch Luftfeuchtigkeit über Isocyanat-Gruppen erfolgt, um PUR-1-Komponenten Systeme auf der Basis blockierter Polyisocyanate deren Härtung als Kalt-Härtung durch Entblocken der Isocyanat-Gruppen mit aliphatischer Hydroxyl-Gruppen erfolgt, um PUR-1-Komponenten Systeme, die physikalisch bei Raumtemperatur durch Abdunsten trocknen, um PUR-1-Komponenten Systeme auf wäßriger Basis (PUR-Ionomere) deren Härtung physikalisch durch Abtrocknen des Wassers erfolgt oder um PUR-2-Komponenten Systeme aus Isocyanat-Präpolymeren und Polyhydroxylverbindungen.

### Vinylesterharze

Im Unterschied zu den konventionellen ungesättigten Polyesterharzen bereitet der Einsatz von hydrophiler oder herkömmlicher silylierter Kieselsäure als rheologisches Additiv in Vinylesterharzen vielfach Schwierigkeiten.

Die erfindungsgemäße hochunpolare Kieselsäure liefert als rheologisches Additiv in diesen Systemen die geforderte notwendige Viskosität, Strukturviskosität, Thixotropie und für das Standvermögen an senkrechten Flächen eine ausreichende Fließgrenze. Dies ist auch bei längerer Lagerzeit dieser Systeme der Fall. Die erfindungsgemäße Kieselsäure ist in dieser Hinsicht hydrophiler und nicht erfindungsgemäß silylierter Kieselsäure überlegen.

Die erfindungsgemäße Kieselsäure liefert hierbei diese Eigenschaften als rheologisches Additiv, ohne zu Störungen der Haftung oder Zwischenhaftung zu führen. Störungen der Überlackierbarkeit (z.B. Kraterbildung), die auf Grund von Migration nicht gebundener Silylierungsmittelbestandteile auftreten können, sind mit der erfindungsgemäßen Kieselsäure nicht zu beobachten.

Desweiteren läßt sich die erfindungsgemäße Kieselsäure als Absorptionsmittel für Mineralöle, Siliconöle und Bioöle verwenden. Die erfindungsgemäße Kieselsäure ist für die Verbesserung der Rieselfähigkeit von Tonern geeignet. Desweiteren eignet sie sich als Kieselsäure in Antischaummitteln vorzugsweise für wäßrige Systeme wie Waschmittel.

### Beispiele

### Beispiel 1

In 100 g einer durch Rühren bei 1000 UpM (Flügelrührer, 6 l Gefäß) fluidisierten pyrogenen Kieselsäure mit einer spezifischen Oberfläche von 200 m²/g (gemessen nach der BET Methode nach DIN 66131 und 66132), einer Verdickungswirkung im UP-Harz⁸⁾ von 6000 mPa.s und einer Verdickungswirkung in 25 %igem Ethanol⁹⁾von 10 mPa.s, herstellbar nach DE 26 20 737 (käuflich erhältlich unter dem Namen WACKER HDK N20 bei Wacker-Chemie GmbH, München, D) werden bei einer Temperatur von 30°C während 15 Minuten 4,5 g Wasser in flüssiger, feinstzerstäubter Form, 16,0 g Methanol in flüssiger, feinstzerstäubter Form sowie 32,0 g Dimethyldichlorsilan (käuflich erhältlich unter dem Namen WACKER Silan M2 bei Wacker-Chemie GmbH, München, D) in flüssiger, feinstzerstäubter Form eingemischt. Die Feinstzerstäubung wird dabei über eine Vollkegeldüse mit 0,1 mm Bohrung und durch einen Druck von 10 bar erzielt. Die so beladene Kieselsäure wird zunächst während 180 Min bei 60°C in einem Trockenschrank getempert, sodann während 180 Min bei 60°C in einem Wirbelbett in einem Stickstoffstrom von 2,5 cm/s gereinigt. Die eingesetzte Menge an Silylierungsmittel entspricht bei 100 Gew.% Reaktionsausbeute einem Kohlenstoffgehalt der Kieselsäure von Gew.%C_{theoretisch} = 5 Gew.% (Gew.%C_{theoretisch} / 100 = Menge Dimethyldichlorsilan (g) ∗ 0,186 dividiert durch 100 + Menge Dimethyldichlorsilan (g) ∗ 0,574). Die Elementaranalyse der Kieselsäure auf Kohlenstoff wird mittels Verbrennung der Kieselsäure in Sauerstoff bei 1000°C gemessen und das entstandene Kohlendioxid wird über Infrarotspektroskopie (Meßgerät Leco CS 244) bestimmt. Die Elementaranalyse weist, bezogen auf das Kieselsäure gebundene Silylierungsmittel, eine Reaktionsausbeute von 60 Prozent auf.

| Analysendaten der Kieselsäure | |
|---|---|
| Aussehen | lockeres, weißes Pulver |
| Oberfläche nach BET ¹⁾ | 160 m²/g |
| Stampfdichte ²⁾ | 55 g/l |
| Trocknungsverlust ³⁾ (2 h bei 230°C) | < 0,1 Gew.% |
| Kohlenstoffgehalt | 3,0 Gew.% |
| pH-Wert ⁴⁾ (in 4 %iger Dispersion) | 4,5 |
| IR-Bande (DRIFT) bei 3750 cm⁻¹ | nicht nachweisbar |
| Extrahierbares Silylierungsmittel ⁵⁾ | nicht nachweisbar |
| Rel. Sorptionskapazität ⁶⁾ von OH⁻ | 22 % |
| Methanolzahl ⁷⁾ | 55 |
| Verdickungswirkung in UP-Harz ⁸⁾ | 5500 mPa.s |
| Verdickungswirkung in 25 %igen Ethanol ⁹⁾ | 800 mPa.s |

| | |
|---|---|
| ¹⁾ nach DIN 66131 und 66132 | |
| ²⁾ nach DIN ISO 787/XI, JIS K 5101/18 | |
| ³⁾ nach DIN ISO 787/II, ASTM D 280, JIS K 5101/21 | |
| ⁴⁾ nach DIN ISO 787/IX, ASTM D 1208, JIS K 5101/24 | |
| ⁵⁾ s. Anhang I | |
| ⁶⁾ s. Anhang II | |
| ⁷⁾ s. Anhang III | |
| ⁸⁾ s. Anhang IV | |
| ⁹⁾ s. Anhang V | |

### Beispiel 2 (nicht erfindungsgemäß)

In 100 g einer durch Rühren bei 1000 UpM (Flügelrührer, 6 l Gefäß) fluidisierten pyrogenen Kieselsäure mit einer spezifischen Oberfläche von 200 m²/g (gemessen nach der BET Methode nach DIN 66131 und 66132), einer Verdickungswirkung im UP-Harz⁸⁾ von 6000 mPa.s und einer Verdickungswirkung in 25 %igem Ethanol⁹⁾ von 10 mPa.s, herstellbar nach DE 26 20 737 (käuflich erhältlich unter dem Namen WACKER HDK N20 bei Wacker-Chemie GmbH, München, D) werden bei einer Temperatur von 100°C während 15 Minuten 4,5 g Wasser und 16,0 g Methanol in flüssiger, feinstzerstäubter sowie 32,00 g Dimethyldichlorsilan (käuflich erhältlich unter dem Namen WACKER Silan M2 bei Wacker-Chemie GmbH, München, D) in gasförmiger Form eingemischt. Die so beladene Kieselsäure wird zunächst während 180 Min. bei 100°C in einem Trockenschrank getempert, sodann während 180 Min bei 100°C in einem Wirbelbett in einem Stickstoffstrom von 2,5 cm/s gereinigt. Die eingesetzte Menge an Silylierungsmittel entspricht bei theoretisch 100 Gew.% Reaktionsausbeute einem Kohlenstoffgehalt der Kieselsäure von Gew.%C_{theoretisch} = 5 Gew.% (Gew.%C_{theoretisch} / 100 = Menge Dimethyldichlorsilan (g) ∗ 0,186 dividiert durch 100 + Menge Dimethyldichlorsilan (g) ∗ 0,574). Die Elementaranalyse der Kieselsäure auf Kohlenstoff weist eine Reaktionsausbeute bezogen auf das Kieselsäure-gebundene Silylierungsmittel von 30 Prozent aus.

| Analysendaten der Kieselsäure | |
|---|---|
| Aussehen | lockeres, weißes Pulver |
| Oberfläche nach BET ¹⁾ | 180 m²/g |
| Stampfdichte ²⁾ | 50 g/l |
| Trocknungsverlust ³⁾ (2 h bei 230°C) | 0,5 Gew.% |
| Kohlenstoffgehalt | 1,5 Gew.% |
| pH-Wert ⁴⁾ (in 4 %iger Dispersion) | 4,2 |
| IR-Bande (DRIFT) bei 3750 cm⁻¹ | vorhanden |
| Extrahierbare Silylierungsmittelreste ⁵⁾ | nachweisbar |
| Rel. Sorptionskapazität ⁶⁾ von OH⁻ | 45 % |
| Methanolzahl ⁷⁾ | 40 |
| Verdickungswirkung in UP-Harz ⁸⁾ | 3500 mPa.s |
| Verdickungswirkung in 25 %igen Ethanol ⁹⁾ | 300 mPa.s |

| | |
|---|---|
| ¹⁾ nach DIN 66131 und 66132 | |
| ²⁾ nach DIN ISO 787/XI, JIS K 5101/18 | |
| ³⁾ nach DIN ISO 787/II, ASTM D 280, JIS K 5101/21 | |
| ⁴⁾ nach DIN ISO 787/IX, ASTM D 1208, JIS K 5101/24 | |
| ⁵⁾ s. Anhang I | |
| ⁶⁾ s. Anhang II | |
| ⁷⁾ s. Anhang III | |
| ⁸⁾ s. Anhang IV | |
| ⁹⁾ s. Anhang V | |

### Beispiel 3

In 100 g einer durch Rühren bei 1000 UpM (Flügelrührer, 6 l Gefäß) fluidisierten pyrogenen Kieselsäure mit einer spezifischen Oberfläche von 200 m²/g (gemessen nach der BET Methode nach DIN 66131 und 66132), einer Verdickungswirkung im UP-Harz⁸⁾ von 6000 mPa.s und einer Verdickungswirkung in 25 %igem Ethanol⁹⁾ von 10 mPa.s, herstellbar nach DE 26 20 737 (käuflich erhältlich unter dem Namen WACKER HDK N20 bei Wacker-Chemie GmbH, München, D) werden bei einer Temperatur von 180°C während 15 Minuten 15,5 g eines Dimethylorganosiloxans, das keine reaktiven Endgruppen aufweist, in schwer flüchtiger, feinstzerstäubter Form eingemischt. Als Dimethylorganosiloxan wird ein Polydimethylsiloxan eingesetzt, endgestoppt mit Trimethylsiloxygruppen, mit einer Viskosität bei 25°C von 10 mPa.s (käuflich erhältlich unter dem Namen WACKER Siliconöl AK 10 bei Wacker-Chemie GmbH, München, D). Die Feinstzerstäubung wird dabei über eine Vollkegeldüse mit 0,1 mm Bohrung und durch einen Druck von 15 bar erzielt. Das eingesetzte Siliconöl AK 10 zeigt bei dieser Temperatur eine Flüchtigkeit kleiner 0,5 Gew.%. Die so beladene Kieselsäure wird nach 15 Minuten weiterem Rühren bei 180°C während 120 Min bei 300°C in einem Trockenschrank unter leichter Stickstoff-Spülung gereinigt. Die eingesetzte Menge an Silylierungsmittel entspricht bei 100 Gew.% Reaktionsausbeute einem Kohlenstoffgehalt der Kieselsäure von Gew.%C_{theoretisch} = 5 Gew.% (Gew.%C_{theoretisch} / 100 = Menge Dimethylorganosiloxan (g) * 0,324 dividiert durch 100 + Menge Dimethylorganosiloxan (g)). Die Elementaranalyse der Kieselsäure auf Kohlenstoff weist eine Reaktionsausbeute bezogen auf das Kieselsäure-gebundene Silylierungsmittel von 64 Prozent aus.

| Analysendaten der Kieselsäure | |
|---|---|
| Aussehen | lockeres, weißes Pulver |
| Oberfläche nach BET ¹⁾ | 170 m²/g |
| Stampfdichte ²⁾ | 55 g/l |
| Trocknungsverlust ³⁾ (2 h bei 230°C) | < 0,1 Gew.% |
| Kohlenstoffgehalt | 3,2 Gew.% |
| pH-Wert ⁴⁾ (in 4 %iger Dispersion) | 4,3 |
| IR-Bande (DRIFT) bei 3750 cm⁻¹ | nicht nachweisbar |
| Extrahierbare Silylierungsmittelreste ⁵⁾ | nicht nachweisbar |
| Rel. Sorptionskapazität ⁶⁾ von OH⁻ | 24 % |
| Methanolzahl ⁷⁾ | 55 |
| Verdickungswirkung in UP-Harz ⁸⁾ | 4600 mPa.s |
| Verdickungswirkung in 25 %igen Ethanol ⁹⁾ | 800 mPa.s |

| | |
|---|---|
| ¹⁾ nach DIN 66131 und 66132 | |
| ²⁾ nach DIN ISO 787/XI, JIS K 5101/18 | |
| ³⁾ nach DIN ISO 787/II, ASTM D 280, JIS K 5101/21 | |
| ⁴⁾ nach DIN ISO 787/IX, ASTM D 1208, JIS K 5101/24 | |
| ⁵⁾ s. Anhang I | |
| ⁶⁾ s. Anhang II | |
| ⁷⁾ s. Anhang III | |
| ⁸⁾ s. Anhang IV | |
| ⁹⁾ s. Anhang V | |

### Beispiel 4 (nicht erfindungsgemäß)

In 100 g einer durch Rühren bei 1000 UpM (Flügelrührer, 6 l Gefäß) fluidisierten pyrogenen Kieselsäure mit einer spezifischen Oberfläche von 200 m²/g (gemessen nach der BET Methode nach DIN 66131 und 66132), einer Verdickungswirkung im UP-Harz⁸⁾ von 6500 mPa.s und einer Verdickungswirkung in 25 %igem Ethanol⁹⁾ von 10 mPa.s, herstellbar nach DE 26 20 737 (käuflich erhältlich unter dem Namen WACKER HDK N20 bei Wacker-Chemie GmbH, München, D) werden bei einer Temperatur von 180°C während 15 Minuten 15,5 g eines Dimethylorganosiloxans, das keine reaktiven Endgruppen aufweist, in flüchtiger Form eingemischt. Als Dimethylorganosiloxan wird Octamethylcyclotetrasiloxan eingesetzt. Die so beladene Kieselsäure wird nach 15 Minuten weiterem Rühren bei 180°C während 120 Min bei 300°C in einem Trockenschrank unter leichter Stickstoff-Spülung gereinigt. Die eingesetzte Menge an Silylierungsmittel entspricht bei 100 Gew.% Reaktionsausbeute einem Kohlenstoffgehalt der Kieselsäure von Gew.%C_{theoretisch} = 5 Gew.% (Gew.%C_{theoretisch} / 100 = Menge Dimethylorganosiloxan (g) * 0,324 dividiert durch 100 + Menge Dimethylorganosiloxan (g)). Die Elementaranalyse der Kieselsäure auf Kohlenstoff weist eine Reaktionsausbeute bezogen auf das Kieselsäure-gebundene Silylierungsmittel von 34 Gew.% aus.

| Analysendaten der Kieselsäure | |
|---|---|
| Aussehen | lockeres, weißes Pulver |
| Oberfläche nach BET ¹⁾ | 185 m²/g |
| Stampfdichte ²⁾ | 48 g/l |
| Trocknungsverlust ³⁾ (2 h bei 230°C) | < 0,1 Gew.% |
| Kohlenstoffgehalt | 1,7 Gew.% |
| pH-Wert ⁴⁾ (in 4 %iger Dispersion) | 4,3 |
| IR-Bande (DRIFT) bei 3750 cm⁻¹ | vorhanden |
| extrahierbare Silylierungsmittelreste ⁵⁾ | nachweisbar |
| Rel. Sorptionskapazität ⁶⁾ von OH⁻ | 62 % |
| Methanolzahl ⁷⁾ | 35 |
| Verdickungswirkung in UP-Harz ⁸⁾ | 3500 mPa.s |
| Verdickungswirkung in 25 %igen Ethanol ⁹⁾ | 200 mPa.s |

| | |
|---|---|
| ¹⁾ nach DIN 66131 und 66132 | |
| ²⁾ nach DIN ISO 787/XI, JIS K 5101/18 | |
| ³⁾ nach DIN ISO 787/II, ASTM D 280, JIS K 5101/21 | |
| ⁴⁾ nach DIN ISO 787/IX, ASTM D 1208, JIS K 5101/24 | |
| ⁵⁾ s. Anhang I | |
| ⁶⁾ s. Anhang II | |
| ⁷⁾ s. Anhang III | |
| ⁸⁾ s. Anhang IV | |
| ⁹⁾ s. Anhang V | |

### Beispiel 5

In einen Massestrom von 1000 g/h einer durch Stickstoff mit einer Leerrohrgasgeschwindigkeit von 0,1 cm/s fluidisierten pyrogenen Kieselsäure mit einer spezifischen Oberfläche von 200 m²/g (gemessen nach der BET Methode nach DIN 66131 und 66132), einer Verdickungswirkung im UP-Harz⁸⁾ von 6500 mPa.s und einer Verdickungswirkung in 25 %igem Ethanol⁹⁾ von 10 mPa.s, herstellbar nach DE 26 20 737 (käuflich erhältlich unter dem Namen WACKER HDK N20 bei Wacker-Chemie GmbH, München, D) wird bei einer Temperatur von 100°C 75 g/h OH-end-ständiges Polydimethylsiloxan mit einer Viskosität von 40 mPas bei 25°C (käuflich erhältlich unter dem Namen WACKER Weichmacher X 345 bei Wacker-Chemie GmbH, D), im Gemisch von 1 zu 1000 Volumenteilen mit Stickstoff bei einem Druck von 10 bar mit einer Vollkegeldüse mit 0,1 mm Bohrung in flüssiger, feinstzerstäubter Form zugefügt, sowie 60 g/h Wasserdampf, 30 g/h Methanoldampf und 135 g/h Dimethyldichlorsilan (käuflich erhältlich unter dem Namen WACKER Silan M2 bei Wacker-Chemie GmbH, München, D) in gasförmiger Form eingemischt. Die Verweilzeit der so beladenen Kieselsäure bei 100°C beträgt 2 h. Anschließend wird die Kieselsäure in einem angeschlossenen weiteren Reaktionsgefäß während 30 Minuten bei 300°C durch Stickstoff mit einer Leerrohrgasgeschwindigkeit von 1,0 cm/s fluidisiert sowie in einem dritten Reaktionsgefäß während 15 Min bei 300°C durch Fluidisierung mit einem Luft-Stickstoff-Gemisch mit einer Leerrohrgasgeschwindigkeit von 2,5 cm/s gereinigt. Die eingesetzte Menge an Silylierungsmittel entspricht bei 100 Gew.% Reaktionsausbeute einem Kohlenstoffgehalt der Kieselsäure von Gew.%C_{theoretisch} = 5 Gew.% (Gew.%C_{theoretisch} / 100 = Menge Dimethyldichlorsilan (g) * 0,186 + Menge Polydimethylsiloxan (g) * 0,324 dividiert durch 100 + Menge Polydimethylsiloxan (g) + Menge Dimethyldichlorsilan (g) * 0,574). Die Elementaranalyse der Kieselsäure auf Kohlenstoff weist eine Reaktionsausbeute bezogen auf das Kieselsäure-gebundene Silylierungsmittel von 88 Gew.% aus.

| Analysendaten der Kieselsäure | |
|---|---|
| Aussehen | lockeres, weißes Pulver |
| Oberfläche nach BET ¹⁾ | 125 m²/g |
| Stampfdichte ²⁾ | 55 g/l |
| Trocknungsverlust ³⁾ (2 h bei 230°C) | < 0,1 Gew.% |
| Kohlenstoffgehalt | 4,4 Gew.% |
| pH-Wert ⁴⁾ (in 4 %iger Dispersion) | 4,4 |
| IR-Bande (DRIFT) bei 3750 cm⁻¹ | nicht nachweisbar |
| Extrahierbares Silylierungsmittel ⁵⁾ | nicht nachweisbar |
| Rel. Sorptionskapazität ⁶⁾ von OH⁻ | 13 % |
| Methanolzahl ⁷⁾ | 80 |
| Verdickungswirkung in UP-Harz ⁸⁾ | 7800 mPa.s |
| Verdickungswirkung in 25 %igen Ethanol ⁹⁾ | 1800 mPa.s |

| | |
|---|---|
| ¹⁾ nach DIN 66131 und 66132 | |
| ²⁾ nach DIN ISO 787/XI, JIS K 5101/18 | |
| ³⁾ nach DIN ISO 787/II, ASTM D 280, JIS K 5101/21 | |
| ⁴⁾ nach DIN ISO 787/IX, ASTM D 1208, JIS K 5101/24 | |
| ⁵⁾ s. Anhang I | |
| ⁶⁾ s. Anhang II | |
| ⁷⁾ s. Anhang III | |
| ⁸⁾ s. Anhang IV | |
| ⁹⁾ s. Anhang V | |

### Beispiel 6

In 100 g einer durch Rühren bei 1000 UpM (Flügelrührer, 6 l Gefäß) fluidisierten pyrogenen Kieselsäure mit einer spezifischen Oberfläche von 200 m²/g (gemessen nach der BET Methode nach DIN 66131 und 66132), einer Verdickungswirkung im UP-Harz⁸⁾ von 6500 mPa.s und einer Verdickungswirkung in 25 %igem Ethanol⁹⁾ von 10 mPa.s, herstellbar nach DE 26 20 737 (käuflich erhältlich unter dem Namen WACKER HDK N20 bei Wacker-Chemie GmbH, München, D) werden bei einer Temperatur von 30°C während 20 Minuten 10 g OH-endständiges reaktives Polydimethylsiloxan mit einer Viskosität von 40 mPas bei 25°C (käuflich erhältlich unter dem Namen WACKER Weichmacher X 345 bei Wacker-Chemie GmbH, D) mit einem Scheibenzerstäuber in Form flüssiger, feinstzerstäubter Tröpfchen mit mittlerem Radius kleiner 100 µm, 10,0 g Wasser in flüssiger, feinstzerstäubter Form, 10,0 g Methanol in flüssiger, feinstzerstäubter Form sowie 10,0 g Dimethyldichlorsilan (käuflich erhältlich unter dem Namen WACKER Silan M2 bei Wacker-Chemie GmbH, München, D) in flüssiger, feinstzerstäubter Form über eine Vollkegeldüse mit 0,1 mm Bohrung und durch einen Druck von 10 bar eingemischt. Die so beladene Kieselsäure wird zunächst während 120 Min bei 100°C in einem Trockenschrank getempert, sodann während 120 Min bei 300°C in einem Trockenschrank unter leichter Stickstoff-Spülung gereinigt. Die eingesetzte Menge an Silylierungsmittel entspricht bei 100 Gew.% Reaktionsausbeute einem Kohlenstoffgehalt der Kieselsäure von Gew.%C_{theoretisch} = 5,1 Gew.% (Gew.%C_{theoretisch} / 100 = Menge Dimethyldichlorsilan (g) * 0,186 + Menge Polydimethylsiloxan (g) * 0,324 dividiert durch 100 + Menge Polydimethylsiloxan (g) + Menge Dimethyldichlorsilan (g) * 0,574). Die Elementaranalyse der Kieselsäure auf Kohlenstoff weist eine Reaktionsausbeute bezogen auf das Kieselsäure-gebundene Silylierungsmittel von 95 Gew. % auf.

| Analysendaten der Kieselsäure | |
|---|---|
| Aussehen | lockeres, weißes Pulver |
| Oberfläche nach BET ¹⁾ | 118 m²/g |
| Stampfdichte ²⁾ | 52 g/l |
| Trocknungsverlust ³⁾ (2 h bei 230°C) | < 0,1 Gew.% |
| Kohlenstoffgehalt | 4,8 Gew.% |
| pH-Wert ⁴⁾ (in 4 %iger Dispersion) | 4,6 |
| IR-Bande (DRIFT) bei 3750 cm⁻¹ | nicht nachweisbar |
| Extrahierbares Silylierungsmittel ⁵⁾ | nicht nachweisbar |
| Rel. Sorptionskapazität ⁶⁾ von OH⁻ | 11 % |
| Methanolzahl ⁷⁾ | 80 |
| Verdickungswirkung in UP-Harz ⁸⁾ | 7600 mPa.s |
| Verdickungswirkung in 25 %igen Ethanol ⁹⁾ | 1900 mPa.s |

| | |
|---|---|
| ¹⁾ nach DIN 66131 und 66132 | |
| ²⁾ nach DIN ISO 787/XI, JIS K 5101/18 | |
| ³⁾ nach DIN ISO 787/II, ASTM D 280, JIS K 5101/21 | |
| ⁴⁾ nach DIN ISO 787/IX, ASTM D 1208, JIS K 5101/24 | |
| ⁵⁾ s. Anhang I | |
| ⁶⁾ s. Anhang II | |
| ⁷⁾ s. Anhang III | |
| ⁸⁾ s. Anhang IV | |
| ⁹⁾ s. Anhang V | |

### Beispiel 7 (nicht erfindungsgemäß)

In 100 g einer durch Rühren bei 1000 UpM (Flügelrührer, 6 l Gefäß) fluidisierten pyrogenen Kieselsäure mit einer spezifischen Oberfläche von 200 m²/g (gemessen nach der BET Methode nach DIN 66131 und 66132), einer Verdickungswirkung im UP-Harz⁸⁾ von 6500 mPa.s und einer Verdickungswirkung in 25 %igem Ethanol⁹⁾ von 10 mPa.s, herstellbar nach DE 26 20 737 (käuflich erhältlich unter dem Namen WACKER HDK N20 bei Wacker-Chemie GmbH, München, D) werden bei einer Temperatur von 30°C während 20 Minuten 10 g OH-endständiges Polydimethylsiloxan mit einer Viskosität von 40 mPas bei 25°C (käuflich erhältlich unter dem Namen WACKER Weichmacher X 345 bei Wacker-Chemie GmbH, D) in Form flüssiger Tröpfchen von einem mittleren Tropfendurchmesser von größer als 500 µm über eine Düse zugesprüht, sowie 10,0 g Wasser in flüssiger, feinstzerstäubter Form, 10,0 g Methanol in flüssiger, feinstzerstäubter, Form sowie 10,0 g Dimethyldichlorsilan (käuflich erhältlich unter dem Namen WACKER Silan M2 bei Wacker-Chemie GmbH, München, D) in flüssiger, feinstzerstäubter Form über eine Vollkegeldüse mit 0,1 mm Bohrung und durch einen Druck von 10 bar eingemischt. Die so beladene Kieselsäure wird zunächst während 120 Min bei 100°C in einem Trockenschrank getempert, sodann während 120 Min bei 300°C in einem Trockenschrank unter leichter Stickstoff-Spülung gereinigt. Die eingesetzte Menge an Silylierungsmittel entspricht bei 100 Gew.% Reaktionsausbeute einem Kohlenstoffgehalt der Kieselsäure von Gew.%C_{theoretisch} = 5,1 Gew.% (Gew.%C_{theoretisch} / 100 = Menge Dimethyldichlorsilan (g) * 0,186 + Menge Polydimethylsiloxan (g) * 0,324 dividiert durch 100 + Menge Polydimethylsiloxan (g) + Menge Dimethyldichlorsilan (g) * 0,574). Die Elementaranalyse der Kieselsäure auf Kohlenstoff weist eine Reaktionsausbeute bezogen auf das Kieselsäure-gebundene Silylierungsmittel von 35 Gew.% aus.

| Analysendaten der Kieselsäure | |
|---|---|
| Aussehen | lockeres, weißes Pulver |
| Oberfläche nach BET ¹⁾ | 183 m²/g |
| Stampfdichte ²⁾ | 65 g/l |
| Trocknungsverlust ³⁾ (2 h bei 230°C) | < 1,6 Gew.% |
| Kohlenstoffgehalt | 1,7 Gew.% |
| pH-Wert ⁴⁾ (in 4 %iger Dispersion) | 4,6 |
| IR-Bande (DRIFT) bei 3750 cm⁻¹ | nicht nachweisbar |
| Extrahierbares Silylierungsmittel ⁵⁾ | nicht nachweisbar |
| Rel. Sorptionskapazität ⁶⁾ von OH⁻ | 52 % |
| Methanolzahl ⁷⁾ | 40 |
| Verdickungswirkung in UP-Harz ⁸⁾ | 3600 mPa.s |
| Verdickungswirkung in 25 %igen Ethanol ⁹⁾ | 400 mPa.s |

| | |
|---|---|
| ¹⁾ nach DIN 66131 und 66132 | |
| ²⁾ nach DIN ISO 787/XI, JIS K 5101/18 | |
| ³⁾ nach DIN ISO 787/II, ASTM D 280, JIS K 5101/21 | |
| ⁴⁾ nach DIN ISO 787/IX, ASTM D 1208, JIS K 5101/24 | |
| ⁵⁾ s. Anhang I | |
| ⁶⁾ s. Anhang II | |
| ⁷⁾ s. Anhang III | |
| ⁸⁾ s. Anhang IV | |
| ⁹⁾ s. Anhang V | |

### Beispiel 8

In 100 g einer durch Rühren bei 1000 UpM (Flügelrührer, 6 l Gefäß) fluidisierten mit Dimethylsiloxygruppen oberflächenmodifizierten pyrogenen Kieselsäure mit einem Kohlenstoffgehalt von 1,0 Gew.% und mit einer spezifischen Oberfläche von 160 m²/g (gemessen nach der BET Methode nach DIN 66131 und 66132), einer Verdickungswirkung im UP-Harz⁸⁾ von 4000 mPa.s und einer Verdickungswirkung in 25 %igem Ethanol⁹⁾ von 200 mPa.s, herstellbar nach DE 42 21 716 (käuflich erhältlich unter dem Namen WACKER HDK H20 bei Wacker-Chemie GmbH, München, D) werden bei einer Temperatur von 30°C während 20 Minuten 10 g OH-endständiges Polydimethylsiloxan mit einer Viskosität von 40 mPas bei 25°C (käuflich erhältlich unter dem Namen WACKER Weichmacher X 345 bei Wacker-Chemie GmbH, D) mit einem Scheibenzerstäuber in Form flüssiger, feinstzerstäubter Tröpfchen mit mittlerem Radius kleiner 100 µm, sowie 10,0 g Wasser in flüssiger, feinstzerstäubter Form, 10,0 g Methanol in flüssiger, feinstzerstäubter Form sowie 10,0 g Dimethyldichlorsilan (käuflich erhältlich unter dem Namen WACKER Silan M2 bei Wacker-Chemie GmbH, München, D) in flüssiger, feinstzerstäubter Form über eine Vollkegeldüse mit 0,1 mm Bohrung und durch einen Druck von 10 bar eingemischt. Die so beladene Kieselsäure wird zunächst während 120 Min bei 100°C in einem Trockenschrank getempert, sodann während 120 Min bei 300°C in einem Trockenschrank unter leichter Stickstoff-Spülung gereinigt. Die eingesetzte Menge an Silylierungsmittel entspricht bei 100 Gew.% Reaktionsausbeute einem Kohlenstoffgehalt der Kieselsäure von Gew.%C_{theoretisch} - 1,0 Gew.% = 5,1 Gew.% (Gew.%C_{theoretisch} / 100 = Menge Dimethyldichlorsilan (g) * 0,186 + Menge Polydimethylsiloxan (g) * 0,324 dividiert durch 100 + Menge Dimethyldichlorsilan (g) * 0,574 + Menge Polydimethylsiloxan (g)). Die Elementaranalyse der Kieselsäure auf Kohlenstoff weist eine Reaktionsausbeute bezogen auf das in der Behandlung zusätzlich Kieselsäure-gebundene Silylierungsmittel von 92 Gew.% aus.

| Analysendaten der Kieselsäure | |
|---|---|
| Aussehen | lockeres, weißes Pulver |
| Oberfläche nach BET ¹⁾ | 105 m²/g |
| Stampfdichte ²⁾ | 42 g/l |
| Trocknungsverlust ³⁾ (2 h bei 230°C) | < 0,1 Gew.% |
| Kohlenstoffgehalt | 5,7 Gew.% |
| pH-Wert ⁴⁾(in 4 %iger Dispersion) | 4,8 |
| IR-Bande (DRIFT) bei 3750 cm⁻¹ | nicht nachweisbar |
| Extrahierbares Silylierungsmittel ⁵⁾ | nicht nachweisbar |
| Rel. Sorptionskapazität ⁶⁾ von OH⁻ | 8 % |
| Methanolzahl ⁷⁾ | 85 |
| Verdickungswirkung in UP-Harz ⁸⁾ | 10600 mPa.s |
| Verdickungswirkung in 25 %igen Ethanol ⁹⁾ | 2900 mPa.s |

| | |
|---|---|
| ¹⁾ nach DIN 66131 und 66132 | |
| ²⁾ nach DIN ISO 787/XI, JIS K 5101/18 | |
| ³⁾ nach DIN ISO 787/II, ASTM D 280, JIS K 5101/21 | |
| ⁴⁾ nach DIN ISO 787/IX, ASTM D 1208, JIS K 5101/24 | |
| ⁵⁾ s. Anhang I | |
| ⁶⁾ s. Anhang II | |
| ⁷⁾ s. Anhang III | |
| ⁸⁾ s. Anhang IV | |
| ⁹⁾ s. Anhang V | |

### Beispiele 9 bis 16

Zur Untersuchung der Kieselsäure in einem lösungsmittelfreien Epoxi-Polyaminoamid-System werden 210 g eines Epoxidharzes (Basis Bisphenol und Epichlorhydrin) mit einer Viskosität bei 25°C von 9000 mPas und einem Epoxidwert nach DIN 53188 von 0,54 (käuflich erhältlich unter dem Namen Europox 730 Schering AG, Bergkamen, D), 2,10 g eines blauen Phthalocyanin-Farbpigmentes (käuflich erhältlich unter dem Namen Heliogenblau L 6700T BASF, Stuttgart, D) und jeweils 8,4 g Kieselsäure, hergestellt jeweils nach den Beispielen 1 bis 8, unter Wasserkühlung bei laufendem Dissolver (käuflich erhältlich unter dem Namen Dispermat F105, Fa. Getzmann, Reichshof-Heienbach, D) während 5 Min bei Raumtemperatur eingetragen (Zahnscheibe mit Durchmesser 5 cm, Drehzahl 2800 UpM) und anschließend auf einer Dreiwalze (Exakt 80 S, Exakt-Apparatebau Otto Herrmann, Norderstedt, D) (Walzenspalt vorn: 2 mm, hinten: 3 mm, Drehzahl 80 rpm, 3 Durchläufe) dispergiert. Für die Bestimmung der "Viskosität vor Lagerung" und für die Bestimmung der "Schichtdicke an senkrechten Flächen vor Lagerung" werden anschließend bzw. für die Bestimmung der "Viskosität nach Lagerung" und für die Bestimmung der "Schichtdicke an senkrechten Flächen nach Lagerung" werden nach 14 Tagen Lagerung bei 60°C 50 g eines Polyaminoamids mit einer Viskosität bei 25°C von 550 mPa.s und einer Aminzahl nach DIN 16945 von 440 (käuflich erhältlich unter dem Namen Eurodur 250 (Schering AG, Bergkamen, D) mit einem Mischer mit einem Blattrührer von 70 mm Durchmesser (käuflich erhältlich unter dem Namen IKA RW27 bei Firma Janke und Kunkel, D) bei 400 UpM während 5 Minuten bei 25°C zugemischt. Sofort anschließend wird die so hergestellte Masse geteilt und der eine Teil zur Bestimmung der Viskosität, der andere Teil zur Bestimmung der Schichtdicke an senkrechten Flächen herangezogen.
Bestimmung der Viskosität: Die Viskosität der Masse wird mit einem Brookfield-Viskosimeter RVT DV-II, Spindel 6 bei 25°C vermessen.
Bestimmung der Schichtdicke an senkrechten Flächen:
Mit Stufenrakeln mit Schichtdicken von 600 bis 2600 µm (unterteilt in Schritte von jeweils 100 µm) wird die Masse auf eine schwarz-weiß Kontrastkarte aufgezogen und die Karte senkrecht gestellt.
Notiert wird als Maßzahl diejenige Schichtdicke in Mikrometern(µm), bei der die applizierte Masse, vor ihrer Aushärtung, zu fließen beginnt.

Die gemessenen Viskositäten und die Schichtdicken an senkrechten Flächen vor und nach Lagerung sind in Tabelle 1 zusammengefaßt.

### Beispiel 17

Es wird verfahren wie in Beispiel 9, jedoch wird anstelle einer Kieselsäure, hergestellt nach Beispiel 1, eine mit Dimethylsiloxygruppen oberflächenmodifizierte pyrogene Kieselsäure mit einem Kohlenstoffgehalt von 1,0 Gew.% und mit einer spezifischen Oberfläche von 160 m²/g (gemessen nach der BET Methode nach DIN 66131 und 66132), herstellbar nach DE 42 21 716 (käuflich erhältlich unter dem Namen WACKER HDK H20 bei Wacker-Chemie GmbH, München, D) eingesetzt. Die Ergebnisse sind in Tabelle 1 aufgeführt.

### Beispiel 18

Es wird verfahren wie in Beispiel 9, jedoch wird anstelle einer Kieselsäure, hergestellt nach Beispiel 1, eine mit Trimethylsiloxygruppen oberflächenmodifizierte pyrogene Kieselsäure mit einem Kohlenstoffgehalt von 2,5 Gew.% und mit einer spezifischen Oberfläche von 140 m²/g (gemessen nach der BET Methode nach DIN 66131 und 66132), herstellbar nach DE 23 44 388 (käuflich erhältlich unter dem Namen WACKER HDK H2000 bei Wacker-Chemie GmbH, München, D) eingesetzt. Die Ergebnisse sind in Tabelle 1 aufgeführt.

### Beispiel 19

Es wird verfahren wie in Beispiel 9, jedoch wird anstelle einer Kieselsäure, hergestellt nach Beispiel 1, eine mit ammoniumfunktionellem Organopolysiloxan oberflächenmodifizierte pyrogene Kieselsäure mit einem Kohlenstoffgehalt von 5,5 Gew.% und mit einer spezifischen Oberfläche von 110 m²/g (gemessen nach der BET Methode nach DIN 66131 und 66132), herstellbar nach DE-OS 37 07 226 (käuflich erhältlich unter dem Namen WACKER HDK H2050 EP bei Wacker-Chemie GmbH, München, D) eingesetzt. Die Ergebnisse sind in Tabelle 1 aufgeführt.

### Beispiel 20

Es wird verfahren wie in Beispiel 9, jedoch wird anstelle einer Kieselsäure, hergestellt nach Beispiel 1, eine hydrophile pyrogene Kieselsäure mit einer spezifischen Oberfläche von 200 m²/g (gemessen nach der BET Methode nach DIN 66131 und 66132), herstellbar nach DE 26 20 737 (käuflich erhältlich unter dem Namen WACKER HDK N20 bei Wacker-Chemie GmbH, München, D) eingesetzt. Die Ergebnisse sind in Tabelle 1 aufgeführt.

**Tabelle 1**

| Beispiele 9 bis 20 | | | | |
|---|---|---|---|---|
| Viskosität (mPa.s) und Schichtdicke (µm) an senkrechten Flächen vor und nach 14 Tage Lagerung bei 60°C | | | | |
| Beispiel | Viskosität (mPa.s) | | Schichtdicke (µm) | |
| | vor Lagerung | nach Lagerung | vor Lagerung | nach Lagerung |
| 9 | 17.000 | 14.600 | 1.700 | 1.200 |
| 10 | 10.300 | 6.900 | 900 | < 600 |
| 11 | 16.300 | 13.800 | 1.600 | 1.200 |
| 12 | 9.700 | 6.800 | 1.000 | < 600 |
| 13 | 21.200 | 21.100 | 2.200 | 2.100 |
| 14 | 19.900 | 19.300 | 2.100 | 2.100 |
| 15 | 10.200 | 6.200 | 800 | < 600 |
| 16 | 23.800 | 23.200 | 2.500 | 2.400 |
| 17 | 9.900 | 7.900 | 800 | < 600 |
| 18 | 5.800 | 5.200 | < 600 | < 600 |
| 19 | 5.100 | 5.100 | < 600 | < 600 |
| 20 | 18.700 | 5.600 | 2.100 | < 600 |

### Beispiele 21 bis 28

Zur Untersuchung der Kieselsäure in einer 2-Komponenten-Polyurethan-Beschichtungsmasse werden 202,67 g eines lösungsmittelfreien, verzweigten, Ether- und Estergruppen-haltigen Polyalkohols mit einem OH-Gehalt von 5 Gew.%, einem Äquivalentgewicht von 340, einer Säurezahl von 2 und einer Viskosität bei 20°C von 4900 mPa.s bei einem Schergefälle von 147 s⁻¹ (käuflich erhältlich unter dem Namen Desmophen 1150 bei Bayer AG, Leverkusen, D), 40,00 g Molekularsieb-Paste mit einer Viskosität bei 20°C von 18000 mPa.s, bestehend aus 50 Gew.% eines Zeoliths mit einem mittleren Porendurchmesser von 0,3 nm in Rhizinusöl (käuflich erhältlich unter dem Namen Baylith-L-Paste bei Bayer AG, Leverkusen, D), jeweils 8,10 g Kieselsäure, hergestellt nach den Beispielen 1 bis 8, 176,00 g Bariumsulfat-Füllstoff mit einer mittleren Korngröße von 8 µm (käuflich erhältlich unter dem Namen Schwerspat C7 bei Sachtleben Chemie GmbH, Duisburg, D), 24,00 g Rutilpigment mit einem Titandioxidgehalt von 92 Gew.% (käuflich erhältlich unter dem Namen Kronos RN 57 bei Kronos Titan-GmbH, Leverkusen, D) und 2,27 g eines Mischpigments von Eisen(III)oxid und Mangan(III)oxid mit einem Eisen(III)oxidgehalt von 59 Gew.% und einer mittleren Korngröße von 6 µm (käuflich erhältlich unter dem Namen Bayferrox 303T bei Bayer AG, Leverkusen, D) nacheinander bei laufendem Dissolver (käuflich erhältlich unter dem Namen Dispermat F105, Fa. Getzmann, Reichshof-Heienbach, D) eingetragen, während 10 Min bei Raumtemperatur vordispergiert (Zahnscheibendissolver mit Durchmesser 5 cm, Drehzahl 2800 UpM) und anschließend einer Hauptdispergierung auf der Dreiwalze unterworfen (Exakt 80 S, Exakt-Apperatebau Otto Herrmann, Norderstedt, D) (Walzenspalt vorn: 2 mm, hinten: 3 mm, Drehzahl 80 rpm, 3 Durchläufe).
Für die Bestimmung der "Viskosität vor Lagerung" und für die Bestimmung der "Schichtdicke an senkrechten Flächen vor Lagerung" werden sofort anschließend bzw. für die Bestimmung der "Viskosität nach Lagerung" und für die Bestimmung der "Schichtdicke an senkrechten Flächen nach Lagerung" werden nach 14 Tagen Lagerung bei 60°C 39,60 g eines lösungsmittelfreien Polyisocyanats auf Diphenylmethandiisocyanat-Basis mit einem Gehalt an Isocyanatgruppen von 31,5 Gew.% und einer Viskosität bei 23°C von 120 mPa.s (käuflich erhältlich unter dem Namen Desmodur VL bei Bayer AG, Leverkusen, D) mit einem Mischer mit einem Blattrührer von 70 mm Durchmesser (käuflich erhältlich unter dem Namen IKA RW27 bei Firma Janke und Kunkel, D) bei 400 UpM während 5 Minuten bei 25°C zugemischt. Sofort anschließend wird die so hergestellte Masse geteilt und der eine Teil zur Bestimmung der Viskosität, der andere Teil zur Bestimmung der Schichtdicke an senkrechten Flächen herangezogen.
Bestimmung der Viskosität: Die Viskosität der Masse wird mit einem Brookfield-Viskosimeter RVT DV-II, Spindel 6 bei 25°C vermessen.
Bestimmung der Schichtdicke an senkrechten Flächen:
Mit Stufenrakeln mit Schichtdicken von 600 µm bis 2600 µm (unterteilt in Schritte von jeweils 100 µm) wird die Masse auf eine schwarz-weiß Kontrastkarte aufgezogen und die Karte senkrechtgestellt. Notiert wird als Maßzahl diejenige Schichtdicke in Mikrometern (µm), bei der die applizierte Masse, vor ihrer Aushärtung, zu fließen beginnt.
Die gemessenen Viskositäten und die Schichtdicke an senkrechten Flächen vor und nach Lagerung sind in Tabelle 2 sammengefaßt.

### Beispiel 29

Es wird verfahren wie in Beispiel 21, jedoch wird anstelle einer Kieselsäure, hergestellt nach Beispiel 1, eine mit Dimethylsiloxygruppen oberflächenmodifizierte pyrogene Kieselsäure mit einem Kohlenstoffgehalt von 1,0 Gew.% und mit einer spezifischen Oberfläche von 160 m²/g (gemessen nach der BET Methode nach DIN 66131 und 66132), herstellbar nach DE 42 21 716 (käuflich erhältlich unter dem Namen WACKER HDK H20 bei Wacker-Chemie GmbH, München, D) eingesetzt. Die Ergebnisse sind in Tabelle 2 aufgeführt.

### Beispiel 30

Es wird verfahren wie in Beispiel 21, jedoch wird anstelle einer Kieselsäure, hergestellt nach Beispiel 1, eine mit Trimethylsiloxygruppen oberflächenmodifizierte pyrogene Kieselsäure mit einem Kohlenstoffgehalt von 2,5 Gew.% und mit einer spezifischen Oberfläche von 140 m²/g (gemessen nach der BET Methode nach DIN 66131 und 66132), herstellbar nach DE 23 44 388 (käuflich erhältlich unter dem Namen WACKER HDK H2000 bei Wacker-Chemie GmbH, München, D) eingesetzt. Die Ergebnisse sind in Tabelle 2 aufgeführt.

### Beispiel 31

Es wird verfahren wie in Beispiel 21, jedoch wird anstelle einer Kieselsäure, hergestellt nach Beispiel 1, eine mit ammoniumfunktionellem Organopolysiloxan Oberflächen-modifizierte pyrogene Kieselsäure mit einem Kohlenstoffgehalt von 5,5 Gew.% und mit einer spezifischen Oberfläche von 110 m²/g (gemessen nach der BET Methode nach DIN 66131 und 66132), herstellbar nach DE-OS 37 07 226 (käuflich erhältlich unter dem Namen WACKER HDK H2050 EP bei Wacker-Chemie GmbH, München, D) eingesetzt. Die gemessenen Ergebnisse sind in Tabelle 2 aufgeführt.

### Beispiel 32

Es wird verfahren wie in Beispiel 21, jedoch wird anstelle einer Kieselsäure, hergestellt nach Beispiel 1, eine hydrophile pyrogene Kieselsäure mit einer spezifischen Oberfläche von 200 m²/g (gemessen nach der BET Methode nach DIN 66131 und 66132), herstellbar nach DE 26 20 737 (käuflich erhältlich unter dem Namen WACKER HDK N20 bei Wacker-Chemie GmbH, München, D) eingesetzt. Die Ergebnisse sind in Tabelle 2 aufgeführt.

**Tabelle 2**

| Beispiel 21 bis 32 | | | | |
|---|---|---|---|---|
| Viskosität (mPa.s) und Schichtdicke (µm) an senkrechten Flächen vor und nach 14 Tage Lagerung bei 60°C | | | | |
| Beispiel | Viskosität (mPa.s) | | Schichtdicke (µm) | |
| | vor Lagerung | nach Lagerung | vor Lagerung | nach Lagerung |
| 21 | 28200 | 25100 | 1800 | 1700 |
| 22 | 10800 | 7900 | < 600 | < 600 |
| 23 | 27900 | 24900 | 1900 | 1600 |
| 24 | 9800 | 6400 | < 600 | < 600 |
| 25 | 41900 | 40800 | 2500 | 2400 |
| 26 | 41400 | 41000 | 2500 | 2400 |
| 27 | 10900 | 6900 | < 600 | < 600 |
| 28 | 43000 | 42300 | 2500 | 2500 |
| 29 | 11000 | 6000 | < 600 | < 600 |
| 30 | 8000 | 4400 | < 600 | < 600 |
| 31 | 6000 | 4000 | < 600 | < 600 |
| 32 | 8000 | 5500 | < 600 | < 600 |

### Beispiele 33 bis 40

Zur Untersuchung der Verdickungswirkung der Kieselsäure in einem Vinylestersystem werden in 145,50 g eines 40 Gew.%igen Polyvinylesterharzes gelöst in Styrol mit einer Viskosität von 500 mPa.s bei 25°C (käuflich erhältlich unter dem Namen Palatal A430 bei BASF AG, Ludwigshafen, D) und jeweils 4,50 g Kieselsäure, hergestellt nach den Beispielen 1 bis 8, mit einem Dissolver (käuflich erhältlich unter dem Namen Dispermat F105, Fa. Getzmann, Reichshof-Heienbach, D) während 15 Min bei Raumtemperatur dispergiert (Zahnscheibendissolver mit Durchmesser 5 cm, Umfangsgeschwindigkeit 7,3 m/s). Anschließend wird die Viskosität der Masse mit einem Brookfield-Viskosimeter RVT DV-II, Spindel 6, bei 25°C gemessen.

Die Ergebnisse sind in Tabelle 3 zusammengefaßt.

### Beispiel 41

Es wird verfahren wie in Beispiel 31, jedoch wird anstelle einer Kieselsäure, hergestellt nach Beispiel 1, eine mit Dimethylsiloxygruppen oberflächenmodifizierte pyrogene Kieselsäure mit einem Kohlenstoffgehalt von 1,0 Gew.% und mit einer spezifischen Oberfläche von 160 m²/g (gemessen nach der BET Methode nach DIN 66131 und 66132), herstellbar nach DE 42 21 716 (käuflich erhältlich unter dem Namen WACKER HDK H20 bei Wacker-Chemie GmbH, München, D) eingesetzt. Die Ergebnisse sind in Tabelle 3 aufgeführt.

### Beispiel 42

Es wird verfahren wie in Beispiel 31, jedoch wird anstelle einer Kieselsäure, hergestellt nach Beispiel 1, eine mit Trimethylsiloxygruppen oberflächenmodifizierte pyrogene Kieselsäure mit einem Kohlenstoffgehalt von 2,5 Gew.% und mit einer spezifischen Oberfläche von 140 m²/g (gemessen nach der BET Methode nach DIN 66131 und 66132), herstellbar nach DE 23 44 388 (käuflich erhältlich unter dem Namen WACKER HDK H2000 bei Wacker-Chemie GmbH, München, D) eingesetzt. Die Ergebnisse sind in Tabelle 3 aufgeführt.

### Beispiel 43

Es wird verfahren wie in Beispiel 9, jedoch wird anstelle einer Kieselsäure, hergestellt nach Beispiel 1, eine mit ammoniumfunktionellem Organopolysiloxan Oberflächen-modifizierte pyrogene Kieselsäure mit einem Kohlenstoffgehalt von 5,5 Gew.% und mit einer spezifischen Oberfläche von 110 m²/g (gemessen nach der BET Methode nach DIN 66131 und 66132), herstellbar nach DE-OS 37 07 226 (käuflich erhältlich unter dem Namen WACKER HDK H2050 EP bei Wacker-Chemie GmbH, München, D) eingesetzt. Die gemessenen Ergebnisse sind in Tabelle 3 aufgeführt.

### Beispiel 44

Es wird verfahren wie in Beispiel 9, jedoch wird anstelle einer Kieselsäure, hergestellt nach Beispiel 1, eine hydrophile pyrogene Kieselsäure mit einer spezifischen Oberfläche von 200 m²/g (gemessen nach der BET Methode nach DIN 66131 und 66132), herstellbar nach DE 26 20 737 (käuflich erhältlich unter dem Namen WACKER HDK N20 bei Wacker-Chemie GmbH, München, D) eingesetzt. Die Ergebnisse sind in Tabelle 3 aufgeführt.

**Tabelle 3**

| Beispiele 33 bis 45 / Viskosität (mPa.s) | |
|---|---|
| Beispiel | Viskosität (mPa.s) |
| 33 | 4400 |
| 34 | 2300 |
| 35 | 4500 |
| 36 | 2100 |
| 37 | 5900 |
| 38 | 5800 |
| 39 | 2200 |
| 40 | 7300 |
| 41 | 3000 |
| 42 | 1800 |
| 43 | 1900 |
| 44 | 1200 |

### Anhang

### Anhang I: Extrahierbares Silylierunasmittel

25 g Kieselsäure werden mit dem Spatel in 100 g Tetrahydrofuran eingearbeitet und anschließend unter Eiskühlung mit dem Dissolver (Pentraulik Labordissolver LD 50 mit Zahnscheibe 40 mm) zu flüssiger Konsistenz verrührt, anschließend 60 sec bei 8400 UpM geschert, dann 60 Min mit Ultraschall equilibriert und nach 2 Tagen wird über eine Druckfiltration klares Filtrat abfiltriert. Das Filtrat wird über Atomabsorptionsspektroskopie (AAS) auf Siliciumgehalt und mit Gaschromatographie (GC) nach Einengen um den Faktor 10 auf Gehalt an Organosiliciumverbindungen untersucht. Nachweisgrenze < 100 ppm Organosiliciumverbindungen bezogen auf Kieselsäure.

### Anhang II: Relative Sorptionskapazität für OH⁻

Nach Sears et al., Anal. Chem. 1956, 12, 1981 kann der Gehalt an sauren Silanolgruppen der Kieselsäure durch Titration mit 0,1 n Natriumhydroxidlösung in gesättigter Kochsalzlösung bestimmt werden. Wird diese Methode auf hochunpolare Kieselsäure angewandt, wird allgemein die Sorptionskapazität für Hydroxylionen (OH⁻) erfaßt. Die relative Sorptionskapazität wird dann definiert als "Sorptionskapazität der unpolaren Kieselsäure dividiert durch die Sorptionskapazität der hydrophilen Ausgangs-Kieselsäure multipliziert mit 100".

### Anhang III: Methanolzahl

Unpolare Kieselsäure, insbesondere hochunpolare Kieselsäure, wird definitionsgemäß von Wasser nicht benetzt; dies führt zu Aufschwimmen der unpolaren Kieselsäure auch nach Schütteln auf dem unterstehenden Wasser. Zugabe von Methanol zu Wasser erniedrigt die Oberflächenspannung des Gemisches gegenüber reinem Wasser. Ist die Oberflächenspannung (mN/m) des Wasser-Methanol-Gemisches von gleicher Größe wie die Oberflächenenergie (mJ/m²) der Kieselsäure, wird die Kieselsäure benetzt und sinkt in das Wasser-Methanol-Gemisch ein. Als Methanolzahl ist derjenige Prozentsatz (Gew%) Methanol in dem Wasser-Methanol-Gemisch definiert, bei dem die Hälfte der Kieselsäure benetzt und in die Flüssigkeit eingesunken ist. Durchführung: Überschichten von Wasser-Methanol-Gemisch mit dem gleichen Volumen an Kieselsäure, intensives Mischen durch heftiges Schütteln während 5 Min., dann 10 Min. Ruhe, anschließend Beurteilung der eingesunkenen Menge an Kieselsäure.

### Anhang IV: Verdickungswirkung in UP-Harz

Jeweils 9 g Kieselsäure werden in 141 g einer 66 Gew%igen Lösung eines ungesättigten Polyesterharzes in Styrol mit einer Säurezahl nach DIN 53402 von 31 und einer Viskosität bei 23°C von 1000 mPa.s (käuflich erhältlich unter dem Namen Ludopal P6 bei der BASF, Ludwigshafen, D) mit einem Dissolver (Pentraulik Labordissolver LD 50 mit Zahnscheibe 40 mm) eingerührt und anschließend bei 2800 UpM dispergiert. Der Viskositätswert bei 25°C gemessen mit einem Rotationsviskosimeter nach DIN 53019 Teil 1 bei einem Schergefälle von 9,7 cm⁻¹, wird als "Verdickungswirkung in UP-Harz" definiert.

### Anhang V: Verdickungswirkung in 25 %igen Ethanol

Jeweils 15 g Kieselsäure werden in einem Gemisch von 16,7 g Wasser und 33,3 g Ethanol p.a. angeteigt, anschließend mit 85 g Wasser versetzt, mit dem Dissolver (Pentraulik Labordissolver LD 50 mit Zahnscheibe 40 mm) eingerührt und anschließend bei 2800 UpM während 5 Min dispergiert. Der Viskositätswert bei 25°C gemessen mit einem Rotationsviskosimeter nach DIN 53019 Teil 1 bei einem Schergefälle von 9,7 cm⁻¹, wird als "Verdickungswirkung in 25%igem Ethanol" definiert.

## Patentansprüche

1. Verfahren zur Silylierung von feinstteiligen anorganischen Oxiden, dadurch gekennzeichnet, daß die feinstteiligen anorganischen Oxide mit mindestens einem im Temperaturbereich des gesamten Verfahrens schwer flüchtigen Silylierungsmittel behandelt werden, mit der Maßgabe, daß das schwer flüchtige Silylierungsmittel den feinstteiligen anorganischen Oxiden flüssig in Form eines feinstzerstäubten Aerosols mit einer mittleren Tropfengröße von < 500 µm zugemischt wird.

2. Verfahren zur Silylierung von feinstteiligen anorganischen Oxiden nach Anspruch 1, dadurch gekennzeichnet, daß die feinstteiligen anorganischen Oxiden zusätzlich mit mindestens einem bei Verfahrenstemperatur flüchtigen Silylierungsmittel behandelt werden, mit der Maßgabe, daß das flüchtige Silylierungsmittel den feinstteiligen anorganischen Oxiden in gasförmiger Form zugemischt wird.

3. Verfahren zur Silylierung von feinststeiligen anorganischen Oxiden nach Anspruch 1 oder 2, dadurch gekennzeichnet, daß das Verfahren aus einer ersten Stufe des Vernischens von feinstteiligen anorganischen Oxiden und Silylierungsmittel, einer zweiten Stufe des Nachbehandelns durch Tempern und einer dritten Stufe der Reinigung in einem Gasstrom besteht.

4. Verfahren zur Silylierung von feinstteiligen anorganischen Oxiden nach einem oder mehreren der Ansprüche 1-3, dadurch gekennzeichnet, daß die Verfahrenstemperatur bei Temperaturen unter 400°C liegt.

5. Verfahren zur Silylierung von feinstteiligen anorganischen Oxiden nach einem oder mehreren der Ansprüche 1-4, dadurch gekennzeichnet, daß als Silylierungsmittel eine oder mehrere Organosiliciumverbindungen, die gleich oder verschieden sein können, eingesetzt werden.

6. Verfahren zur Silylierung von feinstteiligen anorganischen Oxiden nach einem oder mehreren der Ansprüche 1-5, dadurch gekennzeichnet, daß das feinstteilige anorganische Oxid zusätzlich mit einem protischen Lösungsmittel behandelt wird.

7. Verfahren zur Silylierung von feinstteiligen anorganischen Oxiden nach einem oder mehreren der Ansprüche 1-6, dadurch gekennzeichnet, daß das feinstteilige anorganische Oxid bereits einen Kohlenstoffgehalt von unter 1 Gew.-% pro 100 m²/g spezifischer Oberfläche (gemessen nach der BET Methode nach DIN 66131 und 66132) aufweist.

8. Verfahren zur Silylierung von feinstteiligen anorganischen Oxiden nach einem oder mehreren der Ansprüche 1-7, dadurch gekennzeichnet, daß als feinstteiliges anorganisches Oxid Kieselsäure verwendet wird.

9. Verfahren zur Silylierung von feinstteiligen anorganischen Oxiden nach einem oder mehreren der Ansprüche 1-8, dadurch gekennzeichnet, daß als Silylierungsmittel Organosilane der allgemeinen Formel
R¹ ₙSiX₄₋ₙ (I)
worin
R¹ gleich oder verschieden sein kann und ein einwertiger, gegebenenfalls halogenierter, Kohlenwasserstoffrest mit 1 bis 18 C-Atomen,
X gleich oder verschieden sein kann und Halogen, oder OH, OR², OCOR², O(CH₂)ₓOR²,
R² gleich oder verschieden sein kann und einen einwertigen Kohlenwasserstoffrest mit 1 bis 8 C-Atomen bedeutet
n 1 oder 2, und
x = 1, 2, 3 ist,
und/oder Organosiloxane der Formel
(R¹ ₐX_{b}SiO_{1/2})_{z}(R¹ ₂SiO_{2/2})ₓ(R³R¹SiO_{2/2})_{y}(SiX_{b}R¹ ₐ)_{z} (II)
worin
R¹ die oben dafür angegebene Bedeutung hat, und gleich oder verschieden sein kann,
R² die oben dafür angegebene Bedeutung hat,
R³ gleich oder verschieden sein kann, ein Wasserstoff oder ein von R¹ verschiedener, einwertiger, gegebenenfalls halogenierter, Kohlenwasserstoffrest mit 1 bis 18 C-Atomen ist,
X die oben dafür angegebene Bedeutung hat,
a 0, 1, 2 oder 3,
b 0, 1, 2 oder 3,
wobei die Summe a + b gleich 3 ist,
x 0 oder eine ganze Zahl von 1 bis 200,
y 0 oder eine ganze Zahl von 1 bis 200,
und die Summe x + y gleich 0 oder eine ganze Zahl zwischen 1 und 200 ist,
z 0 oder 1 ist, mit der Maßgabe, daß z größer 0 ist, wenn die Summe x+y gleich 0 ist,
eingesetzt werden.

10. Hochunpolare pyrogene Kieselsäure herstellbar nach einem oder mehreren der Ansprüche 1-9 dadurch gekennzeichnet, daß sie eine mittlere Primärteilchen-Partikelgröße kleiner als 100 nm, insbesondere mit einer spezifischen Oberfläche größer als 25 m²/g (gemessen nach der BET Methode nach DIN 66131 und 66132), einen Kohlenstoffgehalt von mindestens 1 Gew.-% pro 100 m²/g spezifischer Oberfläche (gemessen nach der BET Methode nach DIN 66131 und 66132), eine Methanolzahl von gleich oder größer als 50, eine relative Sorptionskapazität an Hydroxylionen von kleiner als 25 %, keinen von der Kieselsäure extrahierbaren oder löslichen Anteil an Silylierungsmittel aufweist und daß auf der hochunpolaren pyrogenen Kieselsäure mittels Infrarot-Spektroskopie keine isolierten Silanolgruppen bei einer Wellenzahl von 3750 cm⁻¹ nachweisbar sind.

11. Hochunpolare pyrogene Kieselsäure nach Anspruch 10, dadurch gekennzeichnet, daß von dem gebundenen Silylierungsmittel mindestens 80 Mol% des Silylierungsmittels aus Siloxygruppen besteht, die mit zwei Kohlenwasserstoffresten substituiert sind.

12. Verwendung der hochunpolaren pyrogenen Kieselsäure nach Anspruch 9 oder 10 oder hergestellt nach einem oder mehreren der Ansprüche 1 bis 8 als Verdickungsmittel in polaren Systemen, als Absorbtionsmittel für Öle, zur Verbesserung der Rieselfähigkeit von Tonern sowie in Antischaummitteln.

## Claims

1. Process for the silylation of very finely divided inorganic oxides, characterized in that the very finely divided inorganic oxides are treated with at least one silylating agent which is relatively nonvolatile in the temperature range of the overall process, with the proviso that the relatively nonvolatile silylating agent is admixed as a liquid with the very finely divided inorganic oxides, in the form of a very finely atomized aerosol having a mean drop size of < 500 µm.

2. Process for the silylation of very finely divided inorganic oxides according to Claim 1, characterized in that the very finely divided inorganic oxides are additionally treated with at least one silylating agent which is volatile at process temperature, with the proviso that the volatile silylating agent is admixed to the very finely divided inorganic oxides in gaseous form.

3. Process for the silylation of very finely divided inorganic oxides according to Claim 1 or 2, characterized in that the process comprises a first step of the mixing of very finely divided inorganic oxides and silylating agent, a second step of aftertreatment by heat treatment, and a third step of purification in a stream of gas.

4. Process for the silylation of very finely divided inorganic oxides according to one or more of Claims 1-3, characterized in that the process temperature is at temperatures below 400°C.

5. Process for the silylation of very finely divided inorganic oxides according to one or more of Claims 1-4, characterized in that the silylating agent employed comprises one or more organosilicon compounds which may be identical or different.

6. Process for the silylation of very finely divided inorganic oxides according to one or more of Claims 1-5, characterized in that the very finely divided inorganic oxide is additionally treated with a protic solvent.

7. Process for the silylation of very finely divided inorganic oxides according to one or more of Claims 1-6, characterized in that the very finely divided inorganic oxide already has a carbon content of less than 1% by weight per 100 m²/g of specific surface area (measured by the BET method in accordance with DIN 66131 and 66132).

8. Process for the silylation of very finely divided inorganic oxides according to one or more of Claims 1-7, characterized in that the very finely divided inorganic oxide used is silica.

9. Process for the silylation of very finely divided inorganic oxides according to one or more of Claims 1-8, characterized in that the silylating agent employed comprises organosilanes of the general formula
R¹ ₙSiX₄₋ₙ (I)
in which
R¹ may in each case be identical or different and is a monovalent, optionally halogenated, hydrocarbon radical having 1 to 18 carbon atoms,
X may in each case be identical or different and is halogen, or OH, OR², OCOR², O(CH₂)ₓOR²,
R² may in each case be identical or different and is a monovalent hydrocarbon radical having 1 to 8 carbon atoms,
n is 1 or 2, and
x is 1, 2, 3,
and/or organosiloxanes of the formula
(R¹ ₐX_{b}SiO_{1/2})_{z}(R¹ ₂SiO_{2/2})ₓ(R³R¹SiO_{2/2})_{y}(SiX_{b}R¹ ₐ)_{z} (II)
in which
R¹ is as defined above, and may in each case be identical or different,
R² is as defined above,
R³ may in each case be identical or different, is a hydrogen or a monovalent, optionally halogenated, hydrocarbon radical having 1 to 18 carbon atoms which is different from R¹,
X is as defined above,
a is 0, 1, 2 or 3,
b is 0, 1, 2 or 3,
the sum a + b being equal to 3,
x is 0 or an integer from 1 to 200,
y is 0 or an integer from 1 to 200,
and the sum x + y being equal to 0 or an integer between 1 and 200,
z is 0 or 1 with the proviso that z is greater than 0 if the sum x+y is equal to 0.

10. Highly apolar, pyrogenic silica, which can be prepared according to one or more of Claims 1-9, characterized in that it has an average primary particle size of less than 100 nm, in particular with a specific surface area of greater than 25 m²/g (measured by the BET method in accordance with DIN 66131 and 66132), a carbon content of at least 1% by weight per 100 m²/g of specific surface area (measured by the BET method in accordance with DIN 66131 and 66132), a methanol number of greater than or equal to 50, a relative sorption capacity for hydroxyl ions of less than 25%, and no fraction of silylating agent which is soluble or extractable from the silica, and in that no isolated silanol groups can be detected at a wavenumber of 3750 cm⁻¹ on the highly apolar pyrogenic silica by means of infrared spectroscopy.

11. Highly apolar, pyrogenic silica according to Claim 10, characterized in that at least 80 mol% of the bonded silylating agent comprises siloxy groups substituted with two hydrocarbon radicals.

12. Use of the highly apolar, pyrogenic silica according to Claim 9 or 10 or prepared according to one or more of Claims 1 to 8 as thickener in polar systems, as absorbent for oils, to improve the flowability of toners and in antifoam compositions.

## Revendications

1. Procédé de silylation d'oxydes inorganiques en poudre ultrafine, caractérisé en ce que les oxydes inorganiques en poudre ultrafine sont traités au moyen d'au moins un agent de silylation peu volatil dans la plage de température de tout le procédé, l'agent de silylation peu volatil étant mélangé aux oxydes inorganiques en poudre ultrafine à l'état liquide, sous la forme d'un aérosol finement pulvérisé dont les gouttes ont une dimension moyenne de 500 µm.

2. Procédé de silylation d'oxydes inorganiques en poudre ultrafine selon la revendication 1, caractérisé en ce que les oxydes inorganiques en poudre ultrafine sont traités en outre au moyen d'au moins un agent de silylation volatil à la température du procédé, l'agent de silylation volatil étant mélangé aux oxydes inorganiques en poudre ultrafine à l'état gazeux.

3. Procédé de silylation d'oxydes inorganiques en poudre ultrafine selon la revendication 1 ou 2, caractérisé en ce que le procédé consiste en une première étape de mélange des oxydes inorganiques en poudre ultrafine et de l'agent de silylation, en une seconde étape de traitement ultérieur par étuvage, et en une troisième étape de purification dans un flux gazeux.

4. Procédé de silylation d'oxydes inorganiques en poudre ultrafine selon l'une ou plusieurs des revendications 1-3, caractérisé en ce que la température du procédé est inférieure à 400°C.

5. Procédé de silylation d'oxydes inorganiques en poudre ultrafine selon l'une ou plusieurs des revendications 1-4, caractérisé en ce que l'on utilise, comme agent de silylation, un ou plusieurs composés du type organosilicium, qui peuvent être identiques ou différents.

6. Procédé de silylation d'oxydes inorganiques en poudre ultrafine selon l'une ou plusieurs des revendications 1-5, caractérisé en ce que l'oxyde inorganique en poudre ultrafine est traité en outre avec un solvant protique.

7. Procédé de silylation d'oxydes inorganiques en poudre ultrafine selon l'une ou plusieurs des revendications 1-6, caractérisé en ce que l'oxyde inorganique en poudre ultrafine présente déjà une teneur en carbone de moins de 1 % en poids par 100 m²/g de surface spécifique (mesurée selon la méthode BET, selon les normes DIN 66131 et 66132).

8. Procédé de silylation d'oxydes inorganiques en poudre ultrafine selon l'une ou plusieurs des revendications 1-7, caractérisé en ce qu'on utilise, comme oxyde inorganique en poudre ultrafine, de l'acide silicique.

9. Procédé de silylation d'oxydes inorganiques en poudre ultrafine selon l'une ou plusieurs des revendications 1-8, caractérisé en ce qu'on utilise, comme agents de silylation, des organosilanes de formule générale
R¹ ₙSiX₄₋ₙ (I)
dans laquelle
R¹ peut être identique ou différent et représente un radical hydrocarbure monovalent, éventuellement halogéné, comprenant de 1 à 18 atomes de carbone,
X peut être identique ou différent et représente un halogène, ou OH, OR², OCOR², O(CH₂)ₓOR²,
R² peut être identique ou différent et représente un radical hydrocarbure monovalent comprenant de 1 à 8 atomes de carbone,
n est 1 ou 2, et
x = 1, 2, 3,
et/ou des organosiloxanes de formule
(R¹ ₐX_{b}SiO_{1/2})_{z}(R¹ ₂SiO_{2/2})ₓ(R³R¹SiO_{2/2})_{y}(SiX_{b}R¹ ₐ)_{z} (II)
dans laquelle
R¹ a la signification indiquée ci-dessus, et peut être identique ou différent,
R² a la signification indiquée ci-dessus,
R³ peut être identique ou différent, et représente l'hydrogène ou un radical hydrocarbure monovalent, éventuellement halogéné, différent de R¹, comprenant de 1 à 18 atomes de carbone,
X a la signification indiquée ci-dessus,
a est 0, 1, 2 ou 3,
b est 0, 1, 2 ou 3,
la somme a + b étant égale à 3,
x étant 0 ou un nombre entier de 1 à 200,
y étant 0 ou un nombre entier de 1 à 200,
et la somme x + y étant égale à 0 ou un nombre entier entre 1 et 200,
z étant 0 ou 1, z étant supérieur à 0 lorsque la somme x + y est égale à 0.

10. Acide silicique pyrogéné fortement apolaire pouvant être fabriqué selon l'une ou plusieurs des revendications 1-9, caractérisé en ce qu'il présente une dimension moyenne de particules primaires inférieure à 100 nm, en particulier avec une surface spécifique supérieure à 25 m²/g (mesurée selon la méthode BET, selon les normes DIN 66131 et 66132), une teneur en carbone d'au moins 1 % en poids par 100 m²/g de surface spécifique (mesurée selon la méthode BET, selon les normes DIN 66131 et 66132), un nombre de méthanol égal ou supérieur à 50, une capacité relative de sorption en ions hydroxyle inférieure à 25 %, et ne comportant aucune fraction d'agent de silylation soluble ou extractible de l'acide silicique, et en ce qu'aucun groupement silanol isolé ne puisse être mis en évidence, dans l'acide silicique pyrogéné fortement apolaire, par spectroscopie infrarouge à un nombre d'onde de 3750 cm⁻¹.

11. Acide silicique pyrogéné fortement apolaire selon la revendication 10, caractérisé en ce que de l'agent de silylation lié, au moins 80 % en moles de l'agent de silylation consiste en groupements siloxy substitués par deux radicaux hydrocarbure.

12. Utilisation de l'acide silicique pyrogéné fortement apolaire selon la revendication 9 ou 10, ou fabriqué selon l'une ou plusieurs des revendications 1 à 8, en tant qu'agent épaississant dans des systèmes polaires, en tant qu'agent absorbant pour huiles, pour améliorer l'écoulabilité de toners ainsi que dans des agents antimoussants.
